(19) Europäisches Patentamt / European Patent Office / Office européen des brevets

(11) **EP 2 834 017 B1**

(12) **EUROPEAN PATENT SPECIFICATION**

(45) Date of publication and mention
of the grant of the patent:
**10.11.2021  Bulletin 2021/45**

(51) Int Cl.:
**B08B 5/04** *(2006.01)*          **B08B 7/02** *(2006.01)*
**B01D 46/00** *(2006.01)*          **A47L 9/04** *(2006.01)*
**B05B 3/14** *(2006.01)*

(21) Application number: **13714294.9**

(22) Date of filing: **04.04.2013**

(86) International application number:
**PCT/EP2013/057136**

(87) International publication number:
**WO 2013/150113 (10.10.2013 Gazette 2013/41)**

(54) **FILTER CLEANING**

FILTERREINIGUNG

NETTOYAGE DE FILTRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.04.2012  GB 201206003**

(43) Date of publication of application:
**11.02.2015  Bulletin 2015/07**

(73) Proprietor: **MossHydro AS
3015 Drammen (NO)**

(72) Inventors:
• **DALE, Jason
Chester CH1 9LS (GB)**
• **ANDERSEN, Aage, Bjørn
NO-2005 Rælingen (NO)**

(74) Representative: **AWA Sweden AB
P.O. Box 11394
404 28 Göteborg (SE)**

(56) References cited:
**EP-A2- 2 027 905          WO-A1-2006/008729
DE-A1- 19 828 171          JP-A- H09 224 885
US-A- 4 526 321**

## Description

The invention relates to a filter cleaning head and to a related method of cleaning a filter, for example for cleaning a filter element of a water filtration device.

Filtration is a preparatory step in many fluid treatment processes and in particular in water treatment processes. Such processes are typically aimed at improving water quality and to reducing risks associated with water or other liquids containing unwanted elements. Filtering processes are also used to remove solids and liquids from a process gas. The filtering may be to enable effective use of the fluid in a subsequent process, for example as a process fluid in a cleaning, cooling or manufacturing process. Improved filtration technologies will benefit currently applied treatment methods regardless of media and applications and further open up for the development of improved processes and technologies.

Filtering is conventionally used in numerous applications such as fresh water applications, potable water production including recirculation of water from domestic and industrial processes, cooling-water intake for power plants, produced water treatment applications from oil/gas exploration, sea water applications, waste water applications and aquaculture applications on land or on floating units such as floating aquaculture installations (fish farms), air conditioning and gas purification, installations associated with the production of oil and gas as well as on-board ships, ballast water management on-board ships, food and drink processing, mineral and slurry processing, pharmaceutical processing, chemical processing and power generation applications such as preprocessing of power station cooling water or processing of electrical transformer oils. Whilst many of these uses for filtration involve water based liquids the use of filters of the type described herein is not limited to water based liquids alone but could also be used to treat acids and alkalis or other fluids where it is desirable to remove unwanted elements from the fluid.

Many of these uses require filtration of a high volume of water at high flow rates. An example of this is the filtration of ship ballast water, for example during treatment of the ballast water to kill micro-organisms, and this is of increasing importance to ship builders and fleet operators. Transferring large volumes of sea water between distinct geographical locations is known to be damaging to marine biodiversity. Regulatory requirements and environmental concerns make it important to effectively treat ship's ballast water before it is discharged in order to remove contaminants and organisms, including micro-organisms. Regulations set onerous requirements for the size of organism that must be removed or disabled and this gives rise to a need for effective filtration and micro-filtration of large volumes of water. The scale of modern ships means the volumes of ballast water tanks is large and consequently the time taken to load and unload ballast tanks is of commercial importance to fleet operators. Additionally, space is surprisingly scarce on-board ships. As a result, efficient filtration systems or more specifically micro-filtration systems that are space efficient and still capable of filtering large volumes of water and removing a considerable amount of matter (organic as well as in-organic) are highly desirable.

A range of filter systems are available to that can filter fluids in these applications. Such systems generally comprise a conventional filter element through which the fluid, raw sea water, for example, flows. All filter systems naturally require the material that is filtered out to be removed. In a typical system, as the liquid flow passes through the wall of the filter elements any dirt, particles or organic matter greater in size than the filter size specification may not pass through the filter element and are trapped on the internal wall of the filter element and begin to form an accretion of filter residue, known as a 'cake'. As the cake of matter builds-up the pressure loss over the filter element increases. It is necessary for the accreted filter residue to be cleaned off the interior wall of the filter element in order to maintain efficiency. Even the best filter designs will suffer from build-up of residue and this problem increases as the effectiveness of the filter in removing solids from the liquid is increased. Thus, to provide an effective filtering of liquid it is necessary to not only provide an improved filtration but also to ensure effective cleaning of the filter.

This cleaning process can be achieved by stripping down the filter to gain access to the filter elements. This has obvious disadvantages in relation to the need for maintenance personnel, access to the filter, and down time for the filter apparatus. A more self-sufficient filtration mechanism can be provided by the use of a backwashing process. Such a process uses a backwashing mechanism that may be configured for continuous cleaning or triggered only when the pressure loss over the filter reaches a certain monitored level or triggered at present intervals or manually. The pressure loss will increase as the 'cake' of filter residue builds-up. Various filter cleaning heads have been employed in various backwashing mechanisms which allow the filter element to be cleaned through reverse water flow through the filter wall. The reverse flow dislodges filtered material, which can then be removed from the filter apparatus.

WO 2006/008729, which discloses a cleaning head in accordance with a part of claim 1, and WO 2011/058556 describe known backwashing processes, in which a cleaning head is passed over the filter wall to clean the filter and remove filter residue. The cleaning head uses a local flow reversal in a relatively small part of the filter wall to dislodge the residue and to remove it from the filtration apparatus. This backwashing process can be performed whilst the filter is in use thus allowing the filter to continuously filter water whilst being cleaned. The cleaning head is arranged to move over the filter surface so that all areas can be cleaned. Typically the filter surface is a cylinder and the cleaning head is arranged to move over the cylindrical surface following a helical path in order to clean the whole surface. The cleaning head must be in close contact with the filter surface during the cleaning operation in order to maintain the pressure difference for reverse flow. This means that some device is required for holding the cleaning head against the filter surface. In addition, the contact portion of the cleaning head will suffer wear due to sliding contact with the filter surface. This means that it is necessary to either adjust the device constantly or to provide some mechanism for automatically adjusting the position to the cleaning head in order to maintain close contact with the filter surface as the contact portion wears away.

In WO 2006/008729 adjustment of the cleaning head position is achieved by the use of a spring element in the cleaning head, which pushes the cleaning head against the filter wall. However, the spring must provide a sufficient force to hold the cleaning head against the cleaning wall under the highest expected pressure differential. This has the result that the cleaning head is generally pushed too hard against the wall during normal operational pressure differences, which can be considerably lower than the maximum design pressure difference. The increased force increases wear and results in undesirable deformation of and damage to the filter wall.

WO 2011/058556 attempts to improve the device of WO 2006/008729 by the use of a resilient bellows with a different elastic deformation characteristic to the spring of WO 2006/008729. However, the bellows arrangement creates further problems, since when there is a high pressure differential then the suction pressure can cause the bellows to retract. This requires an arrangement for equalisation of pressure to ensure that the cleaning head remains in contact with the filter wall. The pressure equalisation uses specially introduced holes in order to equalise pressures in and around the filter cleaning head. These holes are prone to blockage by dirt since the holes are necessarily located on the dirty side of the filter element.

Thus, with the spring device of WO 2006/008729 the force applied between the cleaning head and the filter wall at low pressure differentials is too high, whereas the bellows device of WO 2011/058556 requires pressure equalisation to avoid loss of contact with the filter wall at high pressure differentials.

Viewed from a first aspect, the present invention provides a cleaning head for a filter backwashing mechanism in accordance with claim 1, the cleaning head comprising: a nozzle for contact with a filter element wall and for receiving a flow of backwash fluid, wherein the nozzle comprises a rotor for generating a torque when exposed to the flow of backwash fluid, wherein the cleaning head is arranged such that at least a part of the nozzle will move toward and/or apply a force to the filter element wall as a result of the torque generated by the rotor, and wherein the torque generated by the rotor is converted by a screw thread arrangement into a linear force and/or movement.

With this arrangement the nozzle or a part of the nozzle can be pushed against the filter wall by a force that is produced based on the flow of backwash fluid. The torque generated by the rotor will vary in accordance with the flow rate of the fluid, which itself will vary dependent on the pressure differential. As a consequence the force that keeps the nozzle part in contact with the filter wall is dependent on the pressure differential. This avoids the problems with the prior art systems described above. At low pressure differentials a lower torque is generated and hence the pressure applied to the wall is not excessive as in WO 2006/008729. Higher pressure differentials are matched by higher torques and there is no need for a pressure equalisation mechanism as in WO 2011/058556. This reduces the risk of fouling functional parts of the cleaning head by debris.

In accordance with the invention, the torque generated by the rotor produces a linear movement of the nozzle or a part of the nozzle in a direction that is toward the filter element wall, in use, and/or results in a linear force applied by the nozzle or part thereof in a direction that is toward the filter element wall, in use. The rotor may be mounted in any fashion with any suitable screw thread arrangement being used to convert rotation of the rotor into a linear motion/force. However, the rotor is preferably mounted in the cleaning head with an axis of rotation that is generally perpendicular to the surface of the filter element wall.

In a preferred embodiment the rotor is mounted to the cleaning head via a screw thread arrangement and the screw thread has an axis of rotation that is generally perpendicular to the surface of the filter element wall. This means that the rotor itself will move linearly as it rotates and hence may comprise the part of the nozzle that moves toward the filter element wall. For example, there may be a threaded shaft directly connected to the rotor or to the cleaning head, with the other end of the rotor or the cleaning head being provided with a threaded hole or nut. Preferably the thread mechanism is enclosed and sealed to prevent fluid ingress and to thereby avoid fouling of the thread with debris from the unfiltered process fluid. The rotor may form at least an end part of the nozzle, so that an inlet of the rotor forms the contact part of the nozzle that is intended to contact with the filter element wall.

In an alternative preferred embodiment, the nozzle comprises the rotor and a separate contact part arranged for linear movement driven by rotation of the rotor, the contact part being for contact with the filter element wall during backwashing. With this arrangement, the rotor may be mounted to the cleaning head for rotating movement only, for example via a bearing or similar. The contact part may be a threaded part slidably mounted with respect to a main body of the nozzle and connected to a threaded part that rotates driven by rotation of the rotor, such as a threaded part of the rotor itself. One particular arrangement for the contact part may comprise a threaded rod slidably mounted along the axis of rotation of the rotor and engaged with a complementary threaded hole along the rotor axis, whereby rotation of the rotor moves the contact part in a linear manner so that an end of the contact part is pushed against the filter element wall during backwashing.

With this type of arrangement since the contact part moves linearly without rotation then wear of the contact area is reduced in comparison to the above arrangement where the rotating rotor moves toward and makes contact with the filter element wall. The trade-off is a potentially more complex mechanism since there are at least two moving parts, these being the linearly sliding contact part and the rotating rotor.

Preferably the rotor comprises an inlet that receives backwash fluid and an outlet that discharges backwash fluid to downstream parts of the backwashing mechanism.

The cleaning head may be arranged so that all of the backwash fluid for the cleaning head passes through the rotor before being passed to downstream parts of the backwashing mechanism. This maximises torque production and maximising the flow rate through the rotor also minimises fouling of the rotor and build-up of filter residue within the rotor and associated parts of the cleaning head.

As the contact part at the tip of the nozzle is moved over the inner wall of the filter element in contact with the wall then wear may take place. It is preferred that a relatively soft material such as plastic or PTFE or a slightly deformable material is used for the contact part of the nozzle in order to reduce friction and reduce wear of the expensive filter element and absorb small manufacturing tolerances. Thus, the material of the contact part is preferably softer than the material of the filter element wall. As wear takes place, the contact part of the nozzle will be allowed to move further toward the filter wall propelled by the torque from the rotor, increasing its linear movement until the tip of the nozzle once again creates a seal between the inner wall of the filter element and the nozzle. Therefore, the nozzle automatically compensates for wear of the nozzle up to a predetermined limit. Once this predetermined limit is reached the nozzle may be easily replaced.

Preferably the filter cleaning head includes a hollow conduit for passage of backwash fluid from the nozzle to downstream parts of the backwashing mechanism. The hollow conduit may support the rotor and/or nozzle, for example the hollow conduit may hold a bearing that supports the rotor or a threaded shaft or nut that supports a corresponding nut or threaded shaft of the rotor.

The filter cleaning head may be designed to be retro-fitted onto an existing backwashing mechanism, for instance the hollow conduit may comprise a joint or interface for fitting to a conduit of an existing backwashing mechanism.

Alternatively, the filter cleaning head may be designed together with other parts of the backwashing mechanism and manufactured as a part of a backwashing mechanism designed for use with this filter cleaning head. In this case one preferred embodiment comprises a hollow conduit including a part of a main flow path for the backwashing mechanism and a branch extending from the part of the main flow path for supporting the nozzle. The hollow conduit may be a T-shape. Multiple cleaning heads may hence be connected together by joining the parts of the main flow path in order to produce a backwashing mechanism including multiple cleaning heads on branches extending from a common main flow path.

The part of the main flow path preferably comprises a segment arranged to be joined to another similar segment, for example via two tubes interconnecting in a plug and socket fashion, optionally with a 'snap fit'. This allows a backwashing mechanism to be made up of a plurality of filter cleaning heads spaced along the length of any size of filter element and separated by a predetermined distance. Plastic 'hooks' and seals may be included in the hollow conduit to facilitate the assembly and sealing of each segment. The assembled hollow conduits then hold the plurality of filter cleaning heads in their correct respective locations relative to each other. The hollow conduits may be rotated relative to one another about the axis of the main flow path so that the branches and hence the nozzles extend away from the main flow path in different directions. The backwashing mechanism may further include suitable end pieces for the main flow path of the multiple hollow conduits in order for connection to the remainder of the backwashing mechanism.

The rotor preferably comprises one or more helical rotor blade(s) with a pitch that decreases in the direction of flow of backwash fluid. Thus, the blade(s) may have a pitch that is larger at the end of the rotor closest to the filter element wall, in use, and smaller at the other end of the rotor.

The rotor may have a conic shape, with blades formed between two conic surfaces.

The nozzle may be formed by the rotor and an outer housing or cowling of the rotor that moves with the rotor as it moves linearly relative to the filter element wall.

In a preferred embodiment the rotor comprises: at least one blade arranged to rotate about an axis of rotation, the blade being formed by a surface extending between inner and outer conic helixes; an inner surface and an outer rim enclosing the blade, the inner and outer surfaces following inner and outer generally conical surfaces of revolution corresponding to the paths of the conic helixes, wherein the conic helixes each have a pitch that decreases along the flow direction and wherein the blade extends between the outer rim and the inner surface and is mounted to at least one of the outer rim and the inner surface. The use of a rotor as described above has been found to give an effective mechanism for the required movement of the nozzle. In one example arrangement the radius of the helix increases along the flow direction and the rotor is arranged with the small diameter end of the conic shape forming an inlet for flow of backwashing fluid. Thus, the small diameter end of the cone faces the filter element wall, in use, with the large diameter end of the cone forming the outlet for backwashing fluid as it passes from the nozzle to downstream parts of the backwashing mechanism. Alternatively, it would be possible for the pitch to decrease with decreasing radius so that a large diameter end of the rotor forms the inlet for backwashing fluid.

Preferably the blade is mounted to both of the outer rim and inner surface. This means that the outer rim is joined directly to and rotates with the blade and the remainder of the rotor. As a result, when the rotor moves linearly as well as rotating, there is no need for any complicated arrangement for connection of the outer rim or inner surface to allow movement of these parts relative to the conduit as the rotor nozzle moves toward or away from the filter element wall.

In the present context, a conic helix is a three dimensional curve formed on a surface of a generally conical body. The surface of the generally conical body may be conical, frustoconical or any other shape formed as a surface of revolution that has a generally increasing or decreasing radius. Thus the surface is not specifically limited to a straight sided cone but could instead be a convex sided cone or frustocone such as a zone or ogive nose cone shape, or alternatively the cone could be a concave sided cone or frustocone. What is important is that each conic helix is formed with a radius that increases along an axis of the rotor and a pitch that decreases as the radius increases. The inner and outer conic helixes preferably have the same decrease in pitch, although applications are possible where a different decrease in pitch for the inner and outer conic helix may be used.

The terms "inner" and "outer" are used herein to refer to portions of the rotor that are at a smaller or greater radius from the axis of rotation of the rotor.

Internally, the rotor has one or more flow passages formed between front and back blade surfaces, the outer rim and the inner surface. The flow passages effectively contain the flowing fluid and prevent energy being lost due to tip losses. When the blade extends between and is mounted to both of the outer rim and inner surface then the flow of fluid is fully contained and tip losses are minimised.

In a preferred embodiment the rotor has an inlet opening at the small diameter end of the rotor that is arranged for axial flow of fluid, preferably for solely axial flow. Thus, the opening is perpendicular to the axis of rotation of the rotor and the blades are preferably formed to receive fluid flowing in a generally axial direction and preferably without any (significant) radial flow. Preferably the rotor has an outlet opening at the large diameter end that is also perpendicular to the axis of rotation of the rotor. However, in the preferred embodiment the blades at the large diameter end are not arranged for solely axial flow, but instead may be adapted to expel fluid flowing with a radial component to its movement.

The inner and outer conic helixes preferably start at the same longitudinal position along the axis of rotation of the rotor before extending along the direction of the axis of rotation of the rotor. Preferably the inner and outer conic helixes also extend for about the same axial length along the direction of the axis of rotation of the rotor. With this arrangement when an outer rim of the rotor is present it naturally encloses an opening that requires an axial component of the flow for fluid to flow through the opening.

The conic helix can be any suitable shape that allows for a three dimensional curve with a decreasing pitch and optionally an increasing radius as described above. One preferred option is the use of an Archimedean spiral with a linear increase in radius, can be used to produce a rotor with a simple shape based on a straight sided frustocone. However, the conic helix could alternatively be based on Euler, Fibonacci, Hyperbolic, Lituus, Logarithmic, Theodorus or any other known spiral having varying radius r as a function of the polar coordinate θ but also having a third variable, the length l, varying also as function of the polar coordinate θ. Some curves and/or the use of non-linear radius increases will result in conic helixes based on conical shapes with convex or concave sides, as discussed above.

The inner and outer conic helix may be based on the same form of spiral or curve, with different initial and final radii. Alternatively, different forms of curve or spiral could be used for the inner and outer conic helix to produce a more complex shape for the blade.

Whilst a single blade could be used it is advantageous to use multiple blades. This creates multiple flow passages and also allows the rotor to be easily balanced. The choice of two, three or more rotor blades may depend on a balance of rotor strength, ease of manufacture and energy lost to friction. In the present embodiment, three rotor blades is the preferred choice since it offers a strong and balanced three point construction with minimal friction loss.

The blade or blades are preferably formed as surfaces generated by straight lines between points on the inner and outer conic helixes at the same longitudinal distance along the direction of the axis of rotation of the rotor. Thus, the blade surface may connect the pair of conic helixes in the radial direction. Alternatively, the blades may be formed as surfaces generated by curves between points on the inner and outer conic helixes at the same longitudinal distance along the direction of the axis of rotation of the rotor. With this arrangement the blades surfaces may, for example, be concave when viewed from the large diameter end of the rotor.

The inner and outer conic helixes may both increase in radius at the same rate, such that the conic surfaces are generally parallel. However, it can be advantageous to adjust the performance of the rotor by having a different rate of increase in diameter for the inner and outer conic helixes. The inner conic helix may increase in radius at a slower rate than the increase in radius of the outer conic helix in order to reduce or restrict the hydrodynamic reaction forces and torsional forces produced by the rotor. Alternatively, the inner conic helix radius may increase at a faster rate than the outer conic helix radius in order to increase hydrodynamic reaction forces and torsional forces.

The parameters discussed above, including the radius of the conic helix, pitch of the conic helixes and the relative increase in radius of the inner and outer conic helixes are preferably varied linearly along the length of the rotor. However, non-linear variations of radius, pitch and relative radius would also be possible.

The fluid flow kinetic energy converted by the nozzle is fully adjustable. A desired torsional force for a predetermined flow condition can be achieved by adjusting one or more of (A) the rate of change of radius of one conic helix or both conic helix; (B) the relative change of radius of inner and outer conic helix (C) the change in pitch of one or both conic helix.

Seals or flexible stretchable covers to prevent lost process fluid may be provided between the rotor and the hollow conduit that the rotor is supported by. These seals may be passive O-ring or lip type of seals or may be spring or otherwise activated depending on the application and the level of sealing required or they may be a flexible stretchable cover that distorts easily when the rotor rotates.

The sealing force applied by the nozzle to the filter element wall must be selected carefully so as to provide an effective seal between the contact part of the nozzle and the inner wall of the filter element but should not be selected to produce such a high force that the nozzle creates a force that may deform the filter element wall, create excessive wear or is not able to be reversed by an opposing force that might be experienced in normal operation of the backwashing mechanism. Such an opposing force may occur if the manufacturing tolerance of the filter element requires the nozzle to 'back off' or a short distance so as to accommodate the small differences in dimensions of the filter element. Providing the sealing force is selected carefully, an opposing force is able to cause a reverse rotation of the nozzle thus minimising the chance of seizure or damage to the filter element. Once the variation in manufacturing tolerance has passed the contact part of the nozzle may advance in its normal way towards the filter element wall.

When there is no backwash flow, the sealing force is zero, then the nozzle is deactivated, and the contact part only very lightly touches the inner wall of the filter element. Normally, at this time the backwashing mechanism is motionless as there is no need for the backwashing mechanism to operate. As a zero sealing force occurs between the nozzle and the filtration wall, dismantling of the backwashing mechanism should be easy to perform. However, in some application is may be advantageous to include a tension or torsion spring within the filter cleaning head that causes a 'retractable' force to act on the contact part and/or on the rotor causing the contact part to withdraw from the filter element wall and/or causing the rotor to rotate in reverse when the normal working load is removed i.e. backwashing ceases. Moving the contact part of the nozzle in a linear motion away from the filtration wall in this way allows a clearance between the contact part and the inner wall of the filter element. Alternatively, a device may be provided to create a flow of fluid through the rotor in the reverse direction to the backwash flow, hence reversing the rotation of the rotor thereby also moving the contact part of the nozzle in a linear motion away from the filtration wall allowing a clearance between the contact part and the inner wall of the filter element. Or a simpler mechanism could be to include blank holes in the nozzle so that a suitable tool can be inserted and the contact part can be backed off manually by hand.

Preferably the filter cleaning head forms part of a backwashing mechanism for installation in a filter with one or more filter element(s), the filter element(s) comprising a semi-permeable filtration wall and a filter cleaning head forming part of the backwashing mechanism.

The filter elements may be elements constructed by a metal weave-wire sintered screen method where multiple metal screen layers are sintered together with supporting structures to create a strong filter element that is able to support its own weight. Alternatively, other types of filter element design may be used that under the operating conditions of the filter are permeable to one or more selected components of the liquid mixture, solution or suspension under treatment and is impermeable to the remaining components. Such filter elements may be constructed from natural or processed fibre, man-made organic or synthetic materials, ferrous and non-ferrous metals, glass, activated or natural carbon, ceramics, papers and plastics, sheet or woven materials, non-woven materials, pleated meltspun materials, inorganic bonded porous media, mineral wools, glass fibre, carbon fibre, woven wire and screens, sintered wire mesh, perforated plate, wedge wire and membrane type of designs or any combination thereof.

As an additional benefit, the filter element may advantageously be coated with a suitable compound to provide increased corrosion resistance and/or improved surface qualities. For example, coatings prepared from e.g. $T_iO_2$ or Polyaniline-nano- $T_iO_2$ particles synthesized by in-situ polymerization have excellent corrosion resistance in aggressive environments. The individual filter elements may therefore be coated to improve corrosion resistance. In addition the nano-surface achieved can provide improved surface qualities making the surface very slippery and difficult for matter to 'stick' to the surface thereby requiring less frequent cleaning. The slippery surface also reduces wear of the contact part of the nozzle.

The filtration size specification is determined according to the liquid and particle properties to be filtered. Thus, the filtration size (that is the size of the holes or flow paths through the filter element) may be any suitable size depending on the desired application. For example the filtration size specification of the filter elements may be selected to be <1, 1, 10, 20, 40 or 50 microns or greater depending on the application.

The backwash flow is generated by a pressure differential across the filter element wall and this may be achieved in any suitable way. Advantageously however the pressure differential may be achieved by reducing the pressure at the backwashing flow outlet that communicates with the filter cleaning head via the hollow conduit. This consequently reduces the pressure at the inlet to the filter cleaning head and causes debris to move into the filter cleaning head, along the hollow conduit communicating with the filter cleaning head and finally to the backwash outlet.

The difference between atmospheric pressure at the backwash outlet and the pressure on the outside of the filter element may be sufficient to achieve the required back flow and in such an arrangement a control valve may be provided to selectively open and close the backwash outlet thereby creating the required reverse back flow.

Additionally, or alternatively, a vacuum or suction apparatus may be provided to increase the pressure differential to enhance the back-wash or cleaning operation. In such an arrangement a vacuum or suction apparatus may be coupled to the backwash outlet or to the hollow conduit communicating with the filter cleaning head, either in combination with the control valve or alone.

Advantageously, in filter arrangements that incorporate a plurality of filter elements then each filter element is provided with a backwashing mechanism within the filter element but the multiple filter elements may have a common backwashing outlet. With a plurality of cylindrical filter elements the backwashing mechanisms can be mounted with alignment to the centre line of each filter element and can be driven independently of each other or simultaneously or as a sub-group, for example in pairs. Thus, the filter arrangement can be backwashed in the most effective manner with minimal detrimental influence on process fluid flow within the filter arrangement. Indeed, the multiple backwashing mechanisms could also be programmed to automatically adjust depending on the filtration load so that two, three or all of the backwashing mechanisms operate together with the maximum efficiency possible depending on the pressure loss detected over the filter elements.

In order to move the backwashing mechanism the assembly may be provided with a drive mechanism arranged to rotate the backwashing mechanism whilst simultaneously moving the backwashing mechanism in a linear motion along the axis of the filter element. Movement may be by means of an electric motor and screw or other electro-mechanical, pneumatic or hydraulic arrangement.

As the backwashing mechanism is simultaneously rotated and moved linearly, each filter cleaning head forming part of the backwashing mechanism follows a helical trajectory as it traverses the filter surface. Thus, the filter cleaning head is able to be conveyed over 100% of the entire inner surface of the filter element such that debris can be collected from all parts of the filter element wall. The entire surface of the filter element wall can be cleaned of debris. The filter element can be backwashed whilst allowing the normal operation of the filter arrangement to continue i.e. the backwashing can take place during normal filtration.

The backwashing mechanism preferably supports a plurality of filter cleaning heads which may be spaced along the axial length of the filter element and separated by a predetermined distance. In this way, the amount of linear movement required may be divided by the number of filter cleaning heads so that each filter cleaning head need only be conveyed over part of the inner surface of the semi-permeable wall of the filter element whilst still reaching and cleaning 100% of the semi-permeable filtration wall.

Advantageously, the filter cleaning head forming part of the backwashing mechanism is scalable up to very high filtration capacities from less than 100 m³/hr to above 10,000 m³/hr by simply duplicating the filter cleaning heads, in line with the area of the filter element to be cleaned.

The filter cleaning head ultimately provides an improved overall backwashing mechanism which efficiently and effectively removes debris from the filtration wall of each filter element. The rotor arrangement advantageously converts fluid flow kinetic energy in the backwash flow into a sealing force that results in the close alignment of the filter cleaning head with the inner wall of each filter element. This enables an improved sealing effect resulting in a highly efficient cleaning of the filtration wall with minimal process fluid loss.

The geometry of the nozzle, rotor and the hollow conduit that it rotates within and is supported by lends itself well to efficient manufacture and assembly. These parts may be made from machined, cast or welded material but preferably they may be injection moulded or made by rapid prototyping methods to reduce the costs of mass production.

The inclusion of the filter cleaning head herein forming part of the backwashing mechanism improves the overall efficiency of the backwashing mechanism. The process fluid loss through the improved backwashing mechanism compared with prior art is reduced. Additionally, the cleaning of the filter is also improved. These improvements allow for a reduction of filter mesh sizes without reducing the flow-rate or capacity of a given filter arrangement. Thus, the improved cleaning allows for improvements to the filtration process. Liquid can be subsequently delivered to a (high capacity) treatment process which is considerably "cleaner" because of finer filtration, and this will reduce the burden on the treatment process allowing it to be scaled down (e.g. reducing the concentration of "conditioning" chemicals or opening up for introducing alternative treatment processes).

It will be recognised that the cleaning head may be utilised not only for liquid filtering but also in gas filtration arrangements. For example the cleaning head may be used in a filter that filters solid particles from a gas stream.

Viewed from a second aspect, the invention provides a method comprising use of a cleaning head for cleaning a filter element wall, wherein the cleaning head is as described in relation to the first aspect above, and optionally as described in relation to preferred features of the first aspect. The method may comprise use of a backwashing mechanism as discussed above.

The method may comprise the steps of: (A) creating a pressure differential between outside of the filtration screen and the filter cleaning head such that fluid is caused to flow in a reverse direction through the filter element wall; and (B) activation of the filter cleaning head by conversion of the fluid flow kinetic energy into sealing forces resulting in self-adjusting sealing of the filter cleaning head with the inner wall of the filter element thereby preventing the loss of process fluid and increasing cleaning effectiveness; and (C) moving the filter cleaning head(s) relative to the filtration wall so as to remove debris from 100% of the filtration wall.

Thus, according to such an aspect there is provided for a method of efficiently and effectively backwashing a filter arrangement.

Viewed from a third aspect, the invention provides a method of manufacturing a filter cleaning head comprising providing a nozzle as described in relation to the first aspect above, and optionally as described in relation to preferred features of the first aspect. The method may be a method of manufacturing a backwashing mechanism and may advantageously include retro-fitting the cleaning head to a pre-existing backwashing mechanism, or alternatively providing part or all of the entire cleaning heads in a backwashing mechanism.

Certain preferred embodiments of the invention will now be described by way of example only and with reference to the accompanying drawings in which:

Figures 1a and 1b illustrate a filter cleaning head and its various components in cross-section;

Figures 1c and 1d illustrate an alternative filter cleaning head in cross-section;

Figure 2 shows a cross-section of a filter cleaning head that is able to be retro fitted onto an existing backwashing mechanism;

Figure 3a is a cross-section of a modular conduit segment for holding the filter cleaning head;

Figure 3b shows two conduit sections joined together forming a part of a backwashing mechanism for a cylindrical filter element;

Figure 4 shows a filter with a single filter element having a backwashing mechanism with multiple filter cleaning heads;

Figure 5 shows a filter with multiple similar filter elements, each filter element having a backwashing mechanism with multiple filter cleaning heads;

Figures 6a and 6b show an embodiment of a rotor in side view and end view,

Figures 7a and 7a show the rotor of Figure 6 with the outer peripheral rim partially cut-away so that more detail of the rotor design is visible,

Figures 8a and 8b are perspective views of the rotor of Figures 6 and 7 with the outer rim partially and fully omitted,

Figures 9a and 9b show an alternative embodiment of a rotor where the inner conic helix radius increases at a lesser rate than the outer conic helix radius,

Figures 10a and 10b show a further alternative where the inner conic helix radius increases at a greater rate than the outer conic helix radius,

Figures 11a and 11b show an alternative embodiment where the helical pitch is decreased at a lesser rate than the rotor of Figures 6 and 7,

Figures 12a and 12b show an alternative embodiment where the helical pitch is decreased at a greater rate than the rotor of Figures 6 and 7,

Figure 13 is a graph showing the variation in torsional forces generated by a rotor as the ratio of the minimum radius do and maximum radius Do of the conic helix is changed,

Figure 14 is a graph showing the variation in torsional forces generated by a rotor with modification to the rate at which the inner conic helix radius increases compared to the outer conic helix radius, and

Figure 15 is a graph showing the variation in torsional forces generated by a rotor when the rate of decrease of the helical pitch is adjusted by altering the rate of increase of helical frequency.

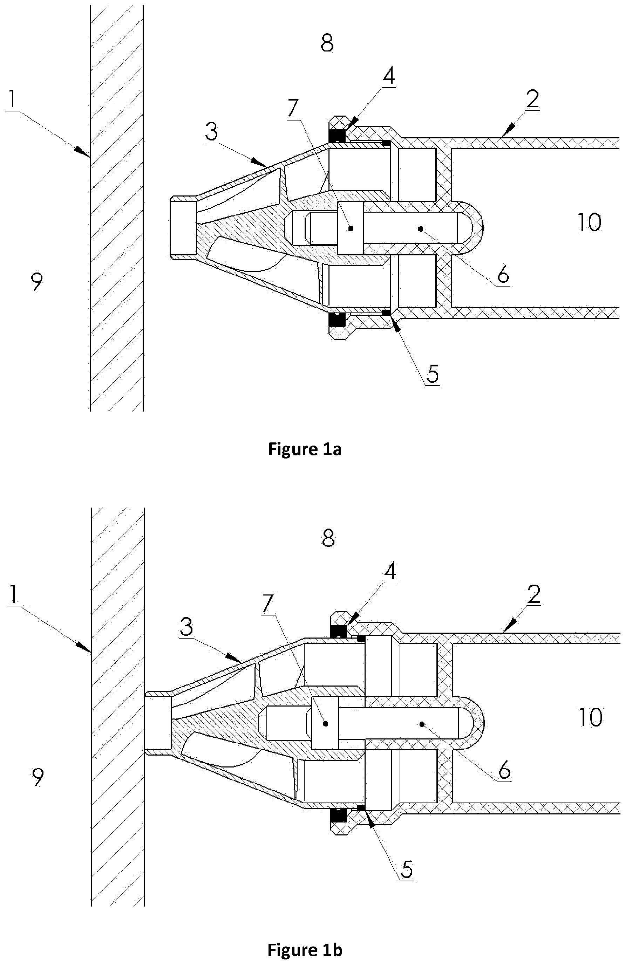

Figures 1a and 1b illustrate a first embodiment of the filter cleaning head and its various components. The filter cleaning head element in Figures 1a and 1b is applied to a semi-permeable filter element wall 1, which in the preferred embodiment is a metal weave-wire sintered screen. A hollow conduit 2 connects a combined rotor/nozzle 3 to the remainder of the backwashing mechanism and also acts to support the rotor/nozzle 3. The rotor/nozzle 3 is a rotating rotor/nozzle 3 and is sealed to the end part of the conduit 2 via a ring seal 4, which acts to prevent process fluid being lost. A further seal 5 depicts another seal acts to prevent dirt ingress in the clearance space between the rotor/nozzle 3 and the hollow conduit 2. The rotor/nozzle 3 in this preferred embodiment is supported for rotating movement on a screw thread 6 by means of a nut 7 held within the rotor/nozzle 3 on its axis of rotation. The filter element 1 receives incoming fluid 8 and provides filtered fluid 9. During filtration, filtered material will build up on the inner surface of the filter element 1. The cleaning head is used in a backwashing process as described below in order to clean the filter element 1 and take filtered material and backwashed fluid 10 away from the filter element 1, as shown in cross-section, the hollow conduit 2 appears to be blocked in this embodiment but in fact the central part including screw thread 6 is supported by a number of arms or spokes (two of which are shown in cross-section) that extend outwards from the central part to the outer diameter. Spaces between these spokes form an open pathway that allows fluid to flow past this support.

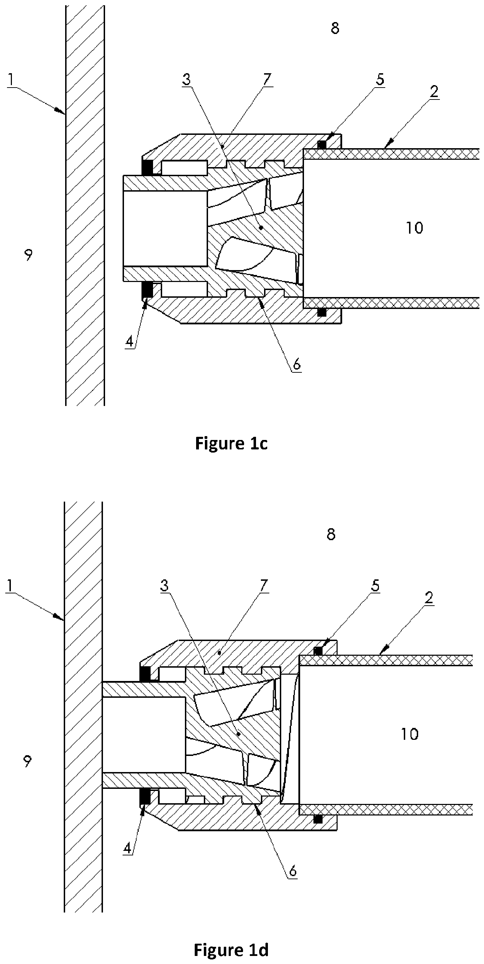

Figures 1c and 1d illustrate an alternative embodiment of the filter cleaning head and its various components. As with the embodiment described above, the filter cleaning head element in Figures 1c and 1d is applied to a semi-permeable filter element wall 1, which in the preferred embodiment is a metal weave-wire sintered screen. A hollow conduit 2 connects a part which acts as a nut 7 which in turn connects a combined rotor/nozzle 3 to the remainder of the backwashing mechanism and also acts to support the rotor/nozzle 3. Hence, in this embodiment the fixed part of the mechanism is the nut 7 formed on the conduit 2, whereas in the embodiment of Figures 1a and 1b the fixed part of the mechanism was a threaded shaft 6 formed on the conduit 2. It will be appreciated that other arrangements for the nut 7 and threaded shaft 6 are also possible.

The rotating rotor/nozzle 3 in the embodiment of Figures 1c and 1d is sealed to the nut 7 via a ring seal 4, which acts to prevent process fluid being lost and prevent dirt ingress. The nut 7 is in turn sealed to the conduit 2 via a further seal 5 which acts to prevent dirt ingress and process fluid entering into the small clearance gap between the nut 7 and the hollow conduit 2 and also holds the nut 7 snugly onto the conduit 2. A further simple fastening such as grub screw (not shown) may be utilised to prevent nut 7 rotating. Alternatively, nut 7 may be glued onto the end of conduit 2, or joined by a threaded connection. In those alternatives the seal 4 is not required.

The rotor/nozzle 3 in this preferred embodiment is supported for rotating movement on a screw thread 6, the male part of which is an integrated feature of the rotor/nozzle 3 and the female part of which is an integrated feature of nut 7. The screw thread 6 maintains the rotor/nozzle 3 on its axis of rotation.

As with the first embodiment, the filter element 1 receives incoming fluid 8 and provides filtered fluid 9. During filtration, filtered material will build up on the inner surface of the filter element 1. The cleaning head is used in a backwashing process as described below in order to clean the filter element 1 and take filtered material and backwashed fluid 10 away from the filter element 1.In use the filter cleaning heads discussed above each functions in a generally similar way as follows. The rotor/nozzle 3 is initially at a fully retracted position as shown in Figure 1a or Figure 1c, and is activated when the backwashing process is initiated. The backwashing process is initiated by the creation of a pressure differential between the fluid 8 on the inside of the filter element 1 and the fluid 10 in the vicinity of the backwash outlet that occurs when a control valve at the backwash outlet is opened (or a vacuum or suction apparatus is applied). At this point, the backwashing fluid begins to move from the inside of the filter element 8 to the backwash outlet.

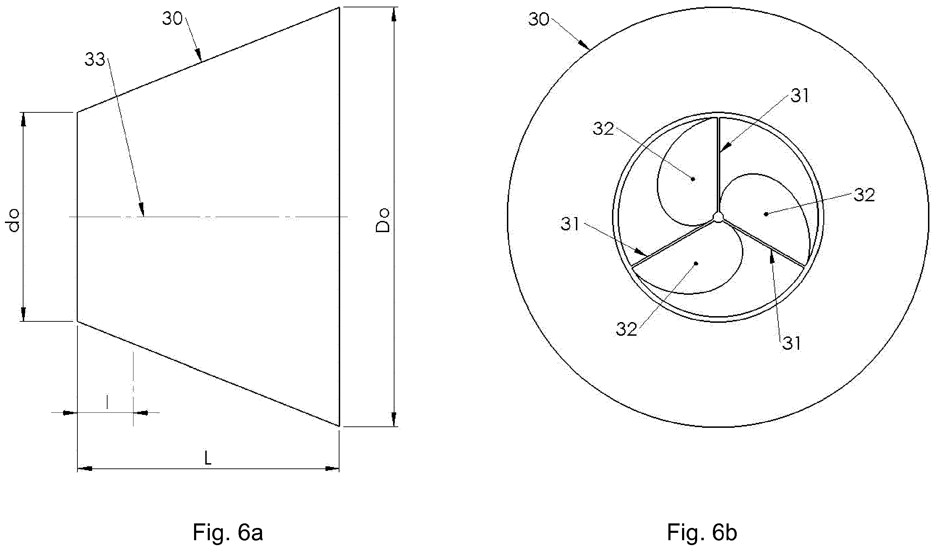

Once the backwash flow begins to move, the fluid flow kinetic energy contained in the backwash flow is converted into a torque that rotates the rotor/nozzle 3. The design of the rotor/nozzle 3 in the preferred embodiment includes rotor blades formed as conic helixes which are particularly effective in generating this torque. The conic helix shape of the rotor blades is discussed in more detail below with reference to Figures 6 to 12.

The torque from the rotor/nozzle 3 and the consequent rotation thereof is converted into a linear motion of the rotor/nozzle 3 relative to the conduit 2 by the screw thread 6 and nut 7. The rotating rotor/nozzle 3 moves from the retracted position shown in Figure 1a or Figure 1c to a deployed position with the end of the rotor/nozzle 3 in contact with the filter element 1 as shown in Figure 1b or Figure 1d. With the rotor/nozzle 3 in contact with the filter element 1 the backwash flow is propelled by a pressure difference between the fluid 9 downstream of the filter element 1 and the fluid 10 in the conduit 2. When the motion of the rotor/nozzle 3 is restrained by the inner wall of the filter element 1 the torque applied to the rotor blades of the rotor/nozzle 3 acts to create a sealing force that holds the end of the rotor/nozzle 3 against the surface of the sealing element. This sealing force promotes a very effective seal and prevents process fluid from leaking between the inner of the filter element 8 and the sealing face of the rotor/nozzle 3 and into the vicinity of the backwash outlet 10.

The accumulated debris on the filter element wall 1 is thus removed from the filter element wall by means of the backwash or reverse flow of process fluid. In normal operation the pressure on the inside of the filter element is greater than that on the outside thereby creating a forward flow of fluid. By enabling a second pressure differential between the outside of the filter element and the inlet to the filter cleaning head forming part of the backwash mechanism a high speed localised (isolated) reverse or back-flow of process fluid is created, causing accreted filter residue to be stripped from the filtration wall 1 and collected by the filter cleaning head. The stripping of debris from the filtration wall 1 is facilitated by the substantial shearing forces created by the high speed backwash flow which in turn are generated by the pressure differential across the filter element wall 1.

The sealing force generated by the rotor/nozzle 3 is selected carefully so as to provide an effective seal between the rotor/nozzle 3 and the inner wall of the filter element 1 whilst avoiding such a high force that deformation of the filter element wall may occur, or that the rotor/nozzle 3 may become stuck against the filter element 1 and is not able to be reversed by an opposing force that might be experienced in normal operation of the backwashing mechanism. Such an opposing force can be usefully applied if the manufacturing tolerance of the filter element 1 requires the rotor/nozzle 3 to 'back off' or a short distance so as to accommodate small differences in dimensions of the filter element 1. Providing the sealing force is selected carefully, an opposing force is able to cause a reverse rotation of the rotor/nozzle 3 thus minimising the chance of seizure or damage to the filter element 1. Once the variation in manufacturing tolerance has passed the rotor/nozzle 3 may advance in its normal way towards the filter element wall 1.

When the rotor/nozzle 3 is located at the deployed position shown in Figure 1b or Figure 1d then the flow of backwash fluid begins in the outer region 9, passes through the semi permeable filtration wall 1 and hence causes a high speed localised (isolated) reverse or backflow of process fluid and dislodged debris to move into the rotor/nozzle 3 of the filter cleaning head. This fluid and debris flows along the hollow conduit 2 into the remainder of the backwashing mechanism. The fluid 10 is then discharged to a backwash outlet. In many filtration processes the backwash fluid is a waste product and hence is discarded.

The high speed localised backwash flow generated at the rotor/nozzle 3 causes cleaning of the filter as debris is stripped from the filtration wall 1 and is collected by the filter cleaning head. The stripping of debris from the filtration wall 1 is facilitated by the substantial shearing forces created by the high speed backwash flow.

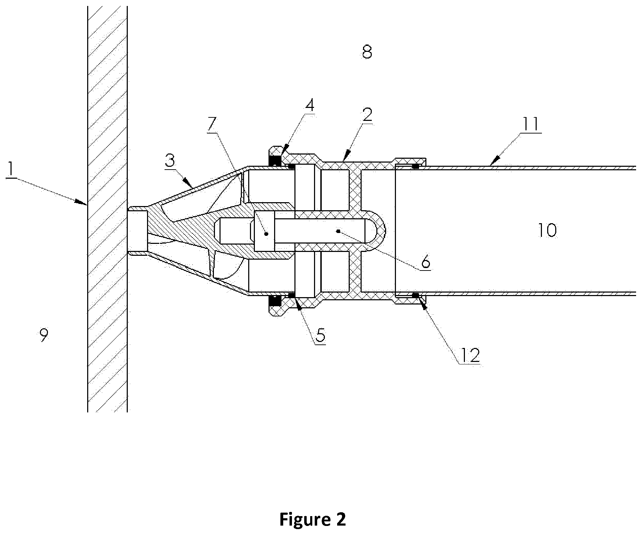

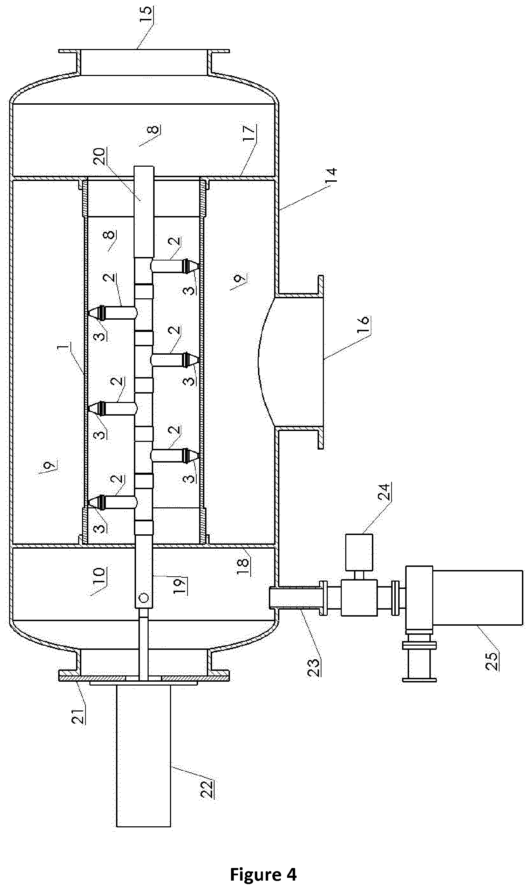

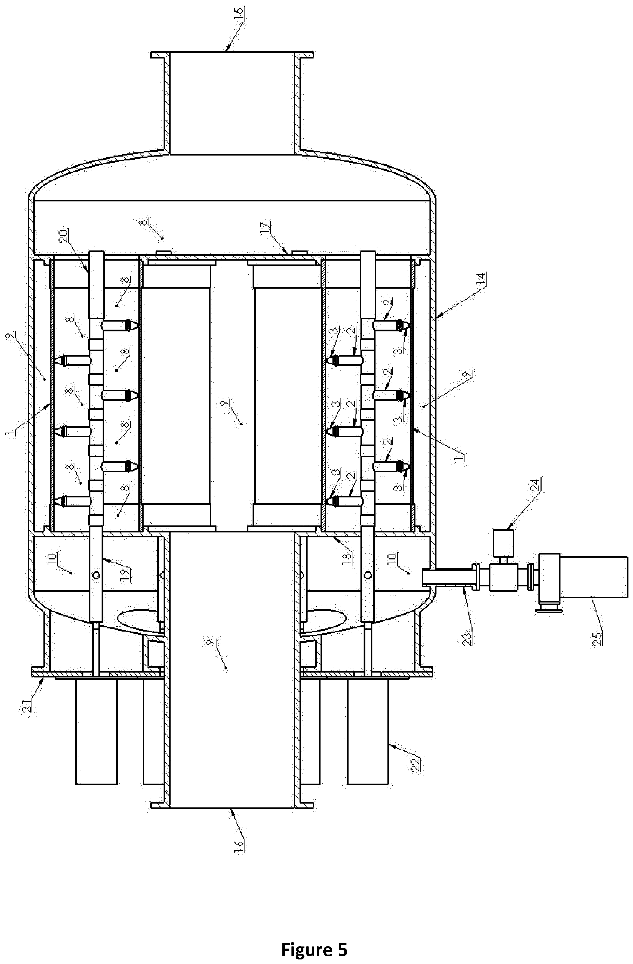

Figure 2 shows a filter cleaning head that is designed to be retro-fitted onto an existing backwashing mechanism. The hollow conduit 2 may fit over the end of an existing tube 11 protruding from the existing backwashing mechanism and be sealed by a ring seal 12 which holds the conduit 2 on the end of the tube 11 and seals the joint. The tube 11 may be a part of a multi-head filter cleaning device similar to that shown in Figures 4 and 5.

With this design the filter cleaning head can be used to replace conventional filter cleaning heads employing nozzles such as the spring loaded nozzles of WO 2006/008729 or the bellows type nozzles of WO 2011/058556. As the nozzles of the cleaning heads suffer from wear they are a consumable part and can be replaced during maintenance. Replacing a conventional cleaning head with a cleaning head using a rotor/nozzle 3 as described herein can result in improved performance and can increase the time before the nozzles need replacing again, for the reasons set out above.

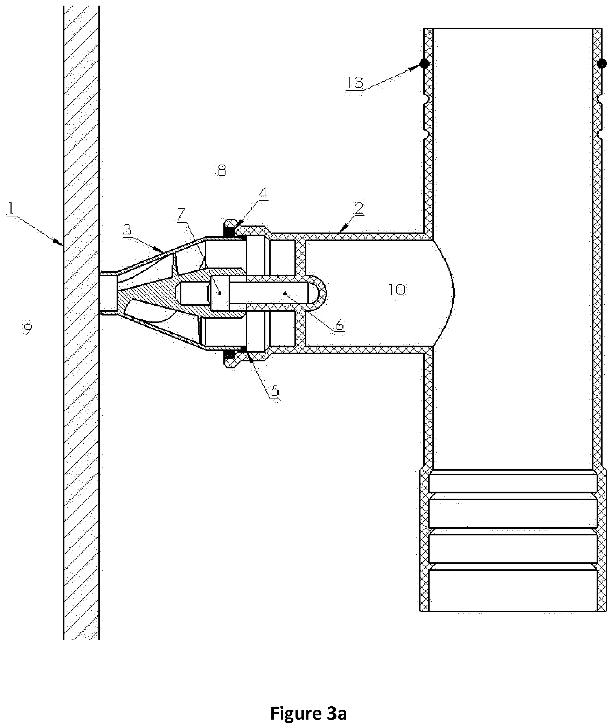

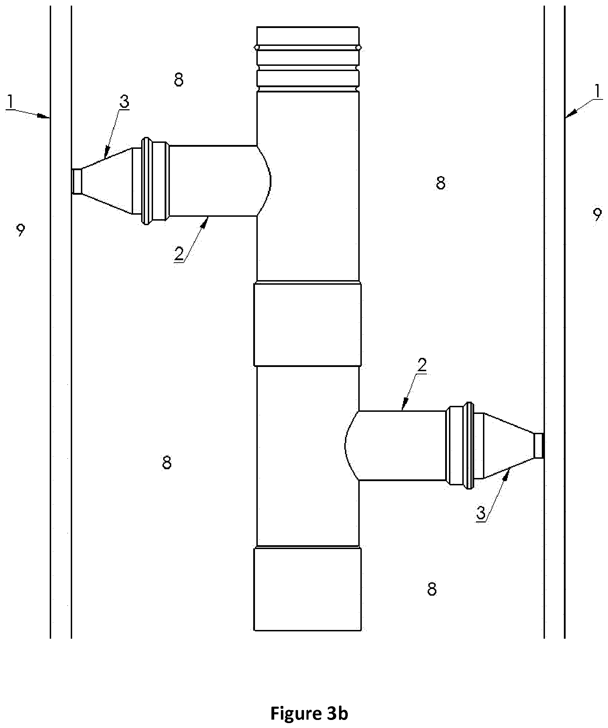

Figures 3a and 3b show a design for the hollow conduit 2 that provides a modular arrangement for a multi-head filter cleaning device for a cylindrical filter element 1. With this design the conduit 2 takes the form of a T-piece with a main flow passage intended to align with the axis of the cylindrical filter element 1 and a branch passage that joins the rotor/nozzle 3, which is as in Figure 1, to the main flow path. The conduit 2 forms a segment of a multi-head system and can be fitted together with other similar conduits 2.

It will be appreciated that whilst Figure 2 and Figure 3a show a cleaning head with features as described above in relation to Figures 1a and 1b this is a matter of convenience and the cleaning head could instead have features as described above in relation to Figures 1c and 1d.

Figure 3b shows two conduits 2 fitted within a cylindrical filter element 1. The filter element 1 is shown in cross-section. The joint between the conduits is designed for a 'snap fit' and a further ring seal 13 is included to seal adjacent segments together. With this arrangement it is possible to build up multiple-heads in a cleaning device for various lengths of filter element 1 as required.

In order to effectively clean the internal surface of the cylindrical filter element 1 the rotor/nozzle 3 of each cleaning head should be placed close to the inner surface of the filter element 1 when they are in the retracted position, so that a small rotational movement will place the rotor/nozzle 3 of each cleaning head in contact with the filter surface for effective cleaning. Thus, the lengths of the side branches of the conduits 2 should be set based on the radius of the filter element 1.

Figure 4 shows the entire backwashing mechanism installed in a filter arrangement that contains a single filter element. Parts of the filter are shown in cross-section so that the backwashing mechanism can be seen. The filter has a generally cylindrical construction, with a filter element 1 that is cylindrical. A filter body 14 encloses the filter element 1 and has an inlet 15 and an outlet 16 and support brackets 17 and 18 that hold the filter element 1 in place. The backwashing mechanism includes multiple cleaning heads that are 'snapped' together as described above in relation to Figures 3a and 3b. Each cleaning head comprises a hollow conduit 2, a rotor/nozzle 3 and other components as discussed above in relation to Figures 1a and 1b. At one of the backwashing mechanism is an outlet end piece 19 that allows fluid connection to the remainder of the backwashing mechanism for the backwashed fluid 10 and also connects the main flow path of the hollow conduits 2 to a shaft and motor/gearbox 22 via a bearing. The bearing permits rotational movement and longitudinal movement of the backwashing mechanism. At the other end of the backwashing mechanism a blind end piece 20 provides a closed end and connects to a similar bearing so that the backwashing mechanism is held for rotational movement between the two ends 19, 20 and can also slide along the length of the cylindrical filter element 1. A mounting flange 21 supports the shaft and motor/gearbox 22, which provides the driving mechanism.

The driving mechanism provided by the shaft and motor/gearbox 22 can rotate the backwashing mechanism whilst simultaneously moving the backwashing mechanism in a linear motion along the axis of the filter element 1. Movement may be by means of an electric motor and screw or other electro-mechanical, pneumatic or hydraulic arrangement. As the backwashing mechanism is simultaneously rotated and moved linearly, the filter cleaning heads forming part of the backwashing mechanism follow a helical trajectory. Thus, the filter cleaning heads are able to be conveyed over 100% of the entire inner surface of the filter element 1 such that debris can be collected from all parts of the semi-permeable filtration wall. Thus, the entire surface of the semi-permeable filtration wall can be cleaned of debris.

In use, the filter receives fluid via inlet 15 and passes this fluid 8 to the inside of the cylindrical filter element 1. Filtered fluid 9 is expelled via the outlet 16. When it is necessary to clean the filter, for example when a pressure loss across the filter element 1 has increased beyond a threshold level, the backwashing mechanism is activated. This can be done by a valve 24 or similar control mechanism. This results in a pressure differential between the fluid 8, 9 undergoing filtration and the back-wash fluid 10. Fluid therefore flows along the rotor/nozzles 3 resulting in torque that seals the rotor/nozzles 3 against the filter wall as discussed above. Fluid 9 from the outer region of the filter then flows back through the semi permeable filtration wall 1 causing a high speed localised (isolated) reverse or back-flow of process fluid at open end of the rotor/nozzles 3. This results in process fluid and debris moving into the rotor/nozzles 3 of the filter cleaning head, along the hollow conduits 2 to the main flow path of the backwashing mechanism and finally to the backwash outlet region 10. The filter body 14 includes a backwash outlet 23 on which may be installed a suitable control valve 24 and/or a vacuum or suction apparatus 25 that enables the pressure differential causing the backwash process to be initiated.

Figure 5 illustrates an example of multiple backwashing mechanisms installed in a filter arrangement that contains a plurality of cylindrical filter elements 1. The filter body 14 has an inlet 15 and an outlet 16 and supports 17 and 18 that hold the plurality of filter elements 1 in place. Liquid passes through the filter elements 1 in parallel. In this embodiment, the multiple backwashing mechanisms each include multiple filter cleaning heads that are 'snapped' together as described above. Each filter cleaning head includes a hollow conduit 2 and a rotor/nozzle 3 as well as other components as discussed above. The ends of the backwashing mechanisms include end pieces 19 and 20 as described above in relation to Figure 4, with connections to shafts and motor/gearboxes 22 that provide suitable drive mechanisms.

The drive mechanisms provided by the shafts and motor/gearboxes 22 are arranged to rotate the individual backwashing mechanisms whilst simultaneously moving the individual backwashing mechanisms in a linear motion along the axis of the individual filter elements 1. As for the arrangement of Figure 4, movement may be by means of an electric motor and screw or other electro-mechanical, pneumatic or hydraulic arrangement.

In use, the backwash fluid passes through the filter wall 1 into the rotor/nozzles 3 and cleans the filter residue in the manner described above. The filter of Figure 5 has a single backwash outlet 23 for all of the parallel filter elements 1. This outlet 23 includes a suitable control valve 24 and/or a vacuum or suction apparatus 25 that enables the pressure differential causing the backwash process to be initiated for all of the parallel filter elements at once.

In an alternative embodiment, which is not shown, each of the filter elements is provided with a separate outlet or a valve system to permit the separate filter elements to be cleaned independently. This may be useful in systems where the build-up of residue occurs at different rates for the different parallel filter elements.

Figures 6a and 6b depict an embodiment of a rotor for the combination rotor/nozzle 3 including an outer peripheral rim 30, blades 31 and inner peripheral surface 32. As explained above, the rotor is used to turn the flow of a liquid and the pressure differential during backwashing into rotational movement and torque on the rotor/nozzle 3 to hold the cleaning head against the filter wall 1. The rotor can be mounted to the cleaning device with a screw thread arrangement using a nut held at the axis of rotation of the rotor within body of the rotor inside of the inner peripheral surface 32, hence being mounted as shown in Figures 1a, 1b and 2 to 3b. The embodiment of Figures 1c and 1d could be used as an alternative. The blades 31 extend between the inner peripheral surface 32 and the outer rim 30 and hence form enclosed flow paths. In this embodiment the underlying spiral that forms the shape of the blades 31 is based upon an Archimedean spiral where there is a linear increase in radius r with the polar coordinate $\theta$. The resulting rotor therefore has the shape of a frustum of a cone. As noted below, other types of curve can be used. Three rotor blades 31 can be seen within the rotor and also the inner peripheral surface 32. The longitudinal axis of the rotor 33 is shown by a centre line. Throughout these figures, the maximum outer diameter of the rotor is denoted by Do and the minimum outer diameter by do. The length of the rotor is denoted by L and the local length l is measured from the end of the rotor having the minimum outer diameter do.

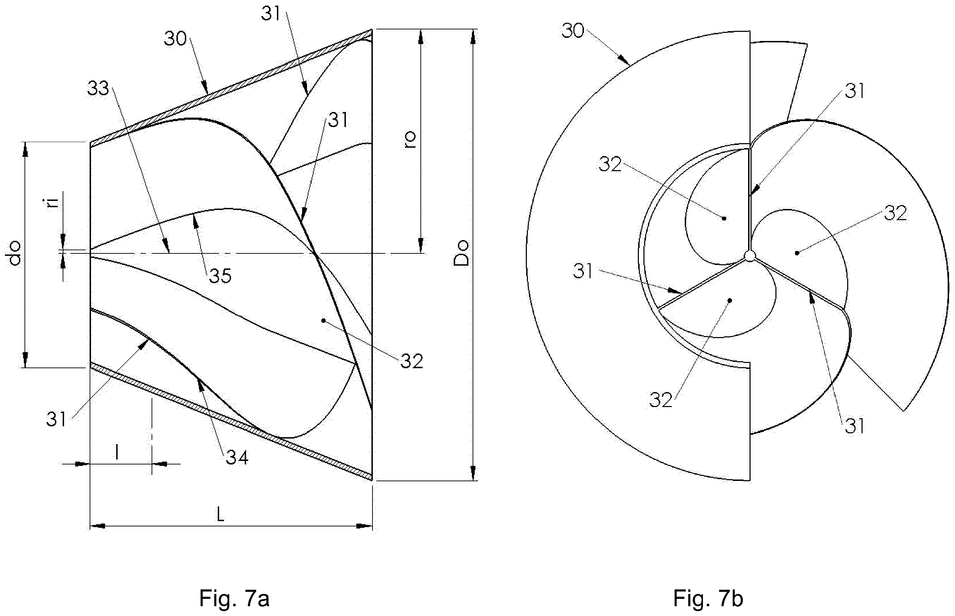

Figures 7a and 7b depict the rotor of Figures 6a and 6b with outer peripheral rim 30 partially hidden for clarity. The inner peripheral rim 32 is also highlighted. The three rotor blades 31 have a shape formed by a pair of conic helixes. Outer conic helix 34 is a helix formed on the internal surface of the outer rim 30 and forms a varying outer radius ro of the blade 31. Inner conic helix 35 is a helix formed on the outside of the inner cone 32 and forms a varying inner radius ri of the blade. Both of the helixes have an increasing radius and a decreasing helical pitch along the longitudinal axis 33. The blades 31 have a decreasing helical pitch resulting from an increasing helical frequency. The pair of conic helixes 34 and 35 are generated in a clockwise direction and have different initial radii which increase at an equal rate to form a pair of parallel conic helixes.

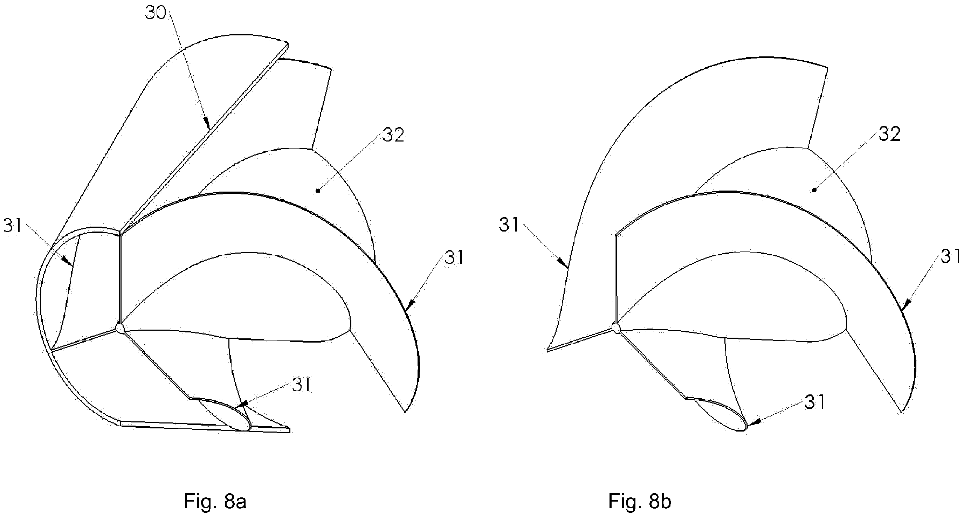

Figures 8a and 8b show perspective views of the rotor of Figures 6 and 7 in which further detail of the shape of the blades 31 can be seen.

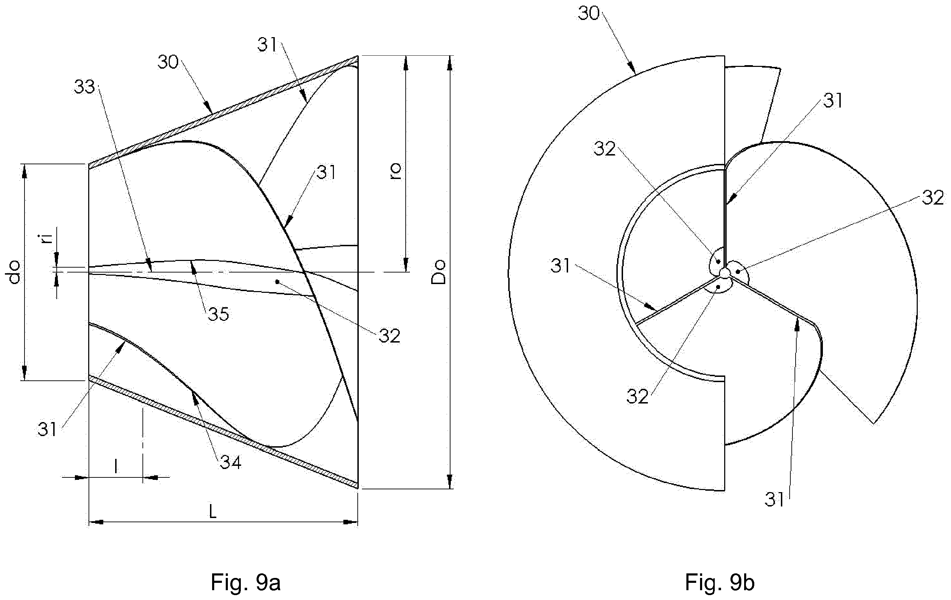

Figures 9a and 9b show a variation of the rotor design. In this embodiment the pair of conic helixes 34 and 35 are generated in a clockwise direction and form the shape of the blades 31 in the manner discussed above. However, the radius ri of the inner conic helix 35 increases at a lesser rate than the radius ro of the outer conic helix 34 to thereby form a pair of non-parallel conic helixes that are spaced further apart at the large diameter end of the rotor than at the small diameter end of the rotor.

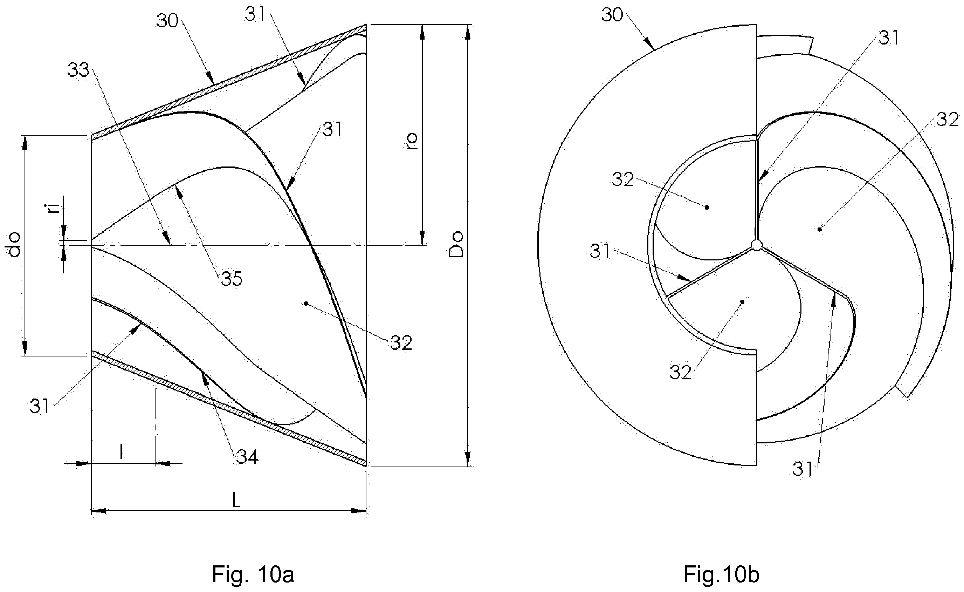

Figures 10a and 10b show a further variation in which the radius ri of the inner conic helix 35 increases at a greater rate than the radius ro of the outer conic helix 34 to thereby form a pair of non-parallel conic helixes that are spaced closer together at the large diameter end of the rotor than at the small diameter end of the rotor.

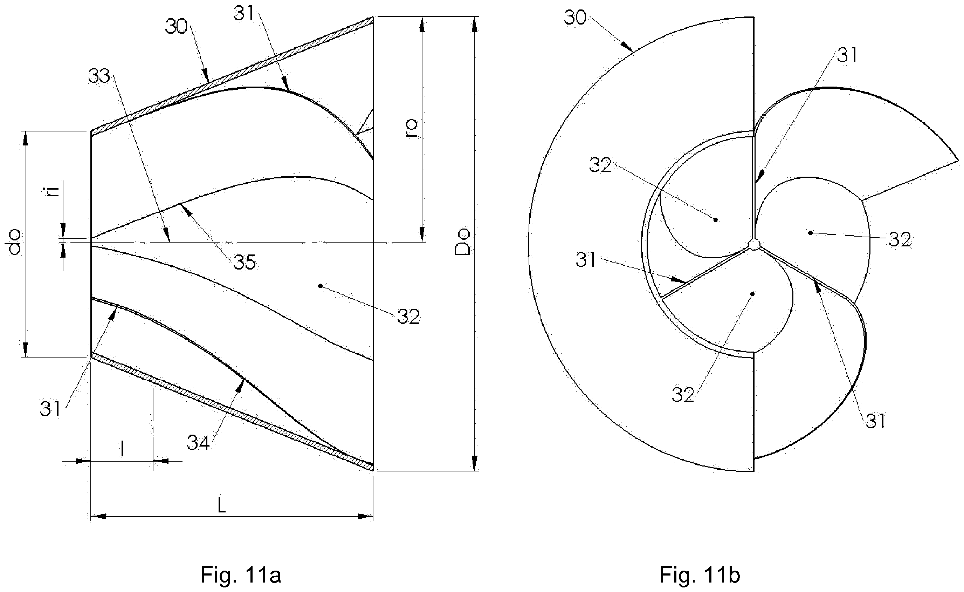

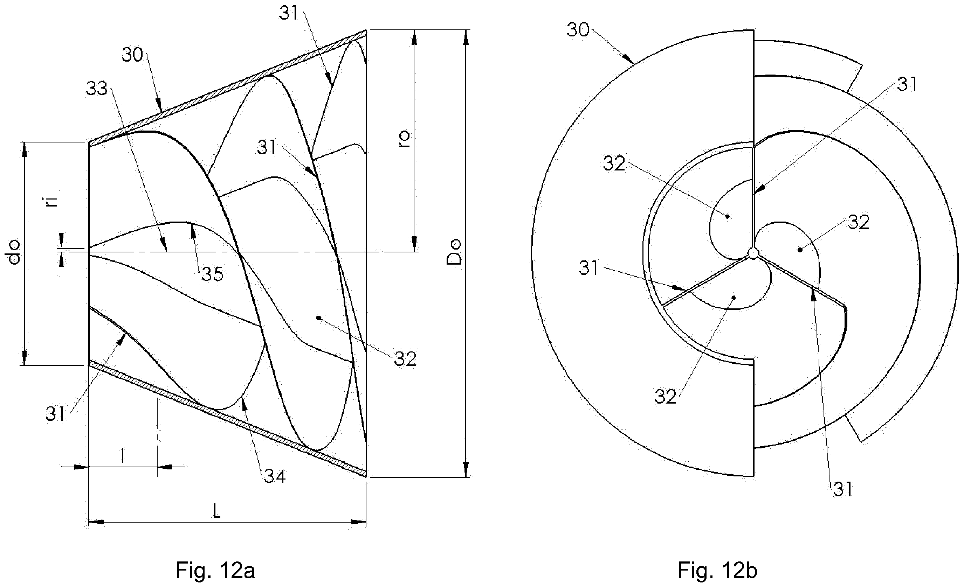

Figures 11a and 11b show a further variation which has parallel inner and outer cones as in Figures 6 and 7, but in which the helical pitch decreases at a slower rate than the previously described embodiments. This results in a slower rate of increase of the helical frequency. Figures 12a and 12b show the opposite variant in which the helical pitch decreases at a greater rate resulting in a faster rate of increase of the helical frequency.

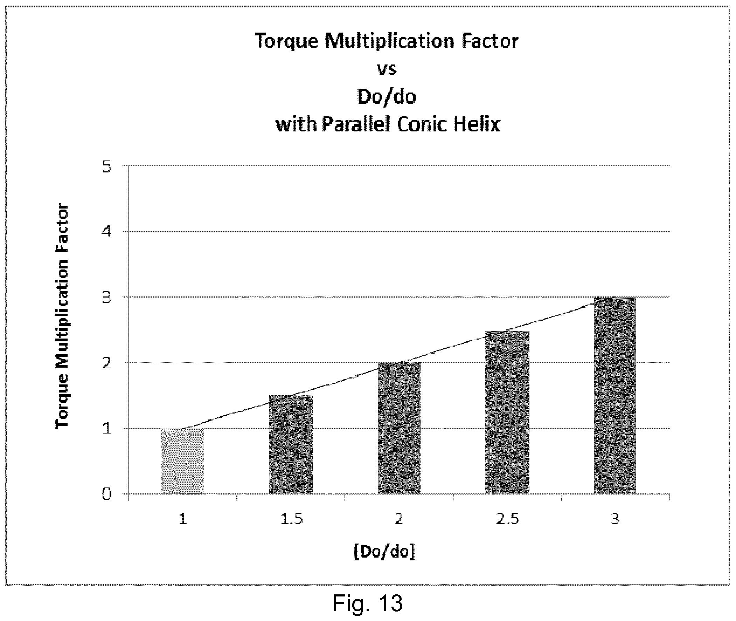

For the rotating rotor/nozzle 3 the design of the blades and rotor can be optimised for expected operating conditions of the filter, as discussed below with reference to Figures 13 to 15.

The geometry of the rotor facilitates the conversion of the kinetic energy in the liquid fluid flow to rotational force or torque. The geometry of the rotor is based on pair of conic helixes 34, 35 that have an increase in radius r with a polar coordinate θ along the longitudinal axis 33, each helix 34, 35 possessing a different initial radius. The pair of conic helixes 34, 35 also have a pitch that decreases with the polar coordinate θ as the radius increases. The decreasing helical pitch provides an increasing helical frequency. This type of conic helix may be defined as a three dimensional spiral having varying radius r as a function of the polar coordinate θ but also having a third variable, the length l, varying also as function of the polar coordinate θ.

The pair of conic helixes may be generated in a clockwise or anticlockwise direction and as shown in Figures 11A to 12B the rate of decrease of the helical pitch resulting in an increase in helical frequency may be varied to obtain an optimum decrease of helical pitch per unit of length. Other variables that have a direct effect on the torque produced are the initial and final radii of the pair of conic helixes (and thus the minimum and maximum inner and outer diameters of the rotor) and the overall length of the rotor. These may also be optimised for a given flow situation.

The rotor blade surfaces of the rotor are formed when the pair of conic helixes are connected together in the radial direction. In the rotor shown in the Figures three identical rotor blades 31 are present. There could alternatively be less or more identical rotor blades 31 spaced equally around the rotor. The rotor blades 31 extend between the inner peripheral surface 32 and the outer rim 30 and are fixed to both of the inner peripheral surface 32 and the outer rim 30 for rotation therewith.

A hydrodynamic reaction force is created on a solid surface when a body of fluid flowing over the solid surface experiences a change of momentum. The net hydrodynamic force acting on the body of fluid in a particular direction is equal to the rate of change of momentum of the body of fluid in that direction as dictated by Newton's Second law. In accordance with Newton's Third Law, an equal and opposite hydrodynamic reaction force acts on the solid surface bounding the body of fluid. Examples of such hydrodynamic reaction forces are those found when a jet of water strikes a wall, or the force felt in a pipe system when the fluid is forced to turn a bend or the force felt on a solid body when placed in a flowing fluid forcing the fluid to flow around it.

In the rotor described herein a solid surface bounding the body of flowing fluid is formed by the front and rear of a pair of rotor blades and the inner and outer rims of the rotor. As the body of fluid flows through the specially shaped rotor and its complicated flow passages it is constantly forced to change direction due to the shape of the blades and the decreasing helical pitch from inlet to outlet which results in an increasing helical frequency, thereby resulting in a continuous rate of change of momentum. This rate of change of momentum necessarily results in a hydrodynamic reaction force that acts on the solid surfaces of the rotor. As the conic helix has a given geometrical direction, this being clockwise or anticlockwise, the hydrodynamic reaction force acts in the opposite direction and since the centre of the hydrodynamic reaction force is displaced at a radial distance from the longitudinal axis, a torsional force is generated that acts around the longitudinal axis of the rotor.

The underlying mathematical spiral of the conic helix can be based on Archimedean, Euler, Fibonacci, Hyperbolic, Lituus, Logarithmic, Theodorus or any other known spiral having varying radius r as a function of the polar coordinate θ but also having a third variable, the length l, varying also as function of the polar coordinate θ. For the reasons discussed above, it is apparent that an underlying spiral possessing a more rapid change in inner and outer radius r with the polar coordinate θ would induce a more rapid rate of change of momentum necessarily resulting in an increased hydrodynamic reaction force. This is akin to comparing a shallow bend with a sharp bend. It is well known that the force felt in a pipe system is increased when the fluid is forced to turn the sharper of the two bends.

In the embodiments described above, for reasons of simplicity, the underlying spiral is based upon an Archimedean spiral when there is a linear increase in radius r with the polar coordinate θ. However, it is equally feasible to construct the rotor by way of a non-linear increase in inner and outer radii r with the polar coordinate θ through the use of a different underlying mathematical spiral such as Archimedean, Euler, Fibonacci, Hyperbolic, Lituus, Logarithmic, Theodorus or any other known spiral having varying radius r as a function of the polar coordinate θ but also having a third variable, the length l, varying also as function of the polar coordinate θ. The use of an Archimedean spiral with linear increase in the radii r with the polar coordinate θ provides a conic helix formed about a straight sided frustocone as shown in the Figures. Conversely, a non-linear increase in the inner and outer radii r with the polar coordinate θ would provide a different shape, for example the external and internal conic surfaces may be curved.

In the preferred embodiments illustrated herein, the pair of conic helixes are chosen to have a linear increase in radii r with the polar coordinate θ along the longitudinal axis, each possessing a different initial radius. In some embodiments, as in Figures 9a to 10b the increasing radius of either conic helix may increase at greater or lesser rates to form a pair of non-parallel conic helixes. In other embodiments, as in Figures 11a to 12b they may increase at the same rate to form a pair of parallel conic helixes. Simultaneously, the helical pitch is also decreased by way of varying l as a function of θ continuously or in discrete steps along the longitudinal axis 33. The rate of decrease of helical pitch or the rate of increase of helical frequency in these embodiments is linear. It may alternatively be non-linear.

The helix shape, radius increase and pitch decrease combine to provide the overall hydrodynamic reaction force on the rotor and thus the torque required to rotate the nozzle and press it against the filter wall. These parameters may be optimised to maximise the power extraction from a given fluid flow or to limit the power extraction from a given fluid flow if required. The following set of equations considers the hydrodynamic reaction forces and torques generated.

$$\dot{m}_{in} = \dot{m}_{out} = \dot{m} \qquad 1$$

$$F_x = \dot{m}(u_2 - u_1) \qquad [2.1]$$

$$F_y = \dot{m}(v_2 - v_1) \qquad [2.2]$$

$$F_z = \dot{m}(w_2 - w_1) \qquad [2.3]$$

$$T_x = F_z \times y - F_y \times z \qquad [3.1]$$

$$T_y = F_x \times z - F_z \times x \qquad [3.2]$$

$$T_z = F_y \times x - F_x \times y \qquad [3.3]$$

As stated in Equation 1, the mass flow $\dot{m}$ into the rotor is constant. The hydrodynamic reaction forces $F_x$, $F_y$ and $F_z$ are necessarily produced due to the continuously decreasing helical pitch or in other words, due to a continuous change in the direction of the fluid flow and thus a change in the velocity components $u$, $v$ and $w$ of the fluid between the velocity components at first and second arbitrary cross sections in the rotor, the first and second arbitrary cross sections being at different distances along the rotor length. This results in a rate of change of momentum and the hydrodynamic reaction forces as expressed by Equation [2.1] to [2.3]. Observing the right hand rule, the torques $T_x$, $T_y$ and $T_z$ around the $x$, $y$ and $z$ axis of the rotor are produced by the out of balance cross product of the hydrodynamic force components and the relevant distances $x$, $y$ and $z$ from the longitudinal axis about which they act as shown by Equations [3.1] to [3.3].

According to this set of equations it can be understood that a change in the rate of decrease of the helical pitch will result in an increase or decrease in the torsional forces and power output. A decrease in torsional force is achieved by a slower rate of decrease of helical pitch and an increase in torsional force is achieved by a faster rate of decrease of helical pitch.

The distance from the longitudinal axis at which the hydrodynamic reaction forces act is continuously increased or decreased by the change in radius of the pair of conic helixes. For each complicated flow passage a separate set of torsional forces result, the total torsional force around the longitudinal axis of the rotor being the sum of all torsional forces acting around the longitudinal axis of the rotor.

In the case where the increasing radii of the pair of conic helixes increase at the same rate to form a pair of parallel conic helixes this results in an equal increase in the distance from the longitudinal axis at which the hydrodynamic reaction forces act and thus a magnification of the torsional force and power output as determined by Equation [3.1] to [3.3]. In this case, the cross sectional areas at first and second arbitrary cross sections in the rotor increase at a constant rate and since the mass flow is constant, the velocity differences and thus hydrodynamic reaction forces produced are constant. The magnification of the torsional force and power output is only dependent on the rate at which the radius of the pair of conic helixes increases.

Where the radius of the pair of conic helixes increase at greater or lesser rates to form a pair of non-parallel conic helixes, this has the effect of changing the rate at which the cross sectional areas at first and second arbitrary cross sections in the rotor increase. When the inner conic helix increases in radius at a slower rate than the increase in radius of the outer conic helix, the arbitrary cross sectional areas increase at a faster rate. This has the effect of reducing the changes in the velocity components and since the mass flow is constant, the hydrodynamic reaction forces produced are lower. When the inner conic helix radius increases at a faster rate than the outer conic helix radius, the arbitrary cross sectional areas increase at a slower rate. This has the effect of increasing the changes in the velocity components and since the mass flow is constant, the hydrodynamic reaction forces produced are larger. Thus, through manipulation of the parameters of the rotor, it is possible to manipulate the extracted power output and optimise or restrict it as required.

In addition, the connection between the pair of conic helixes is not limited to being straight. The connection may be curved, for example, a concave surface may be used to increase the surface area along the surface of the specially shaped rotor blade in order to spread the resulting hydrodynamic forces over a larger area and reduce internal stresses. Similarly, the pair of conic helixes are generally axially aligned for simplicity but may be slightly misaligned in order to change the surface characteristics of the conic helixes in a beneficial way.

As discussed above, various parameters of the rotor and blade shape can be varied depending on the purpose of the rotor and the operating conditions that it will be exposed to, such as flow rate and so on. Figures 13 to 15 illustrate how changes to these parameters affect the performance of the rotor.

Figure 13 is a graph illustrating the effect of varying the ratio of the outer maximum diameter Do of the rotor to the minimum outer diameter do. In this case, the radii of the pair of conic helixes are increased at the same rate to form a pair of parallel conic helixes. The increasing diameter results in an increase in the distance from the longitudinal axis at which the hydrodynamic reaction forces act and thus provides a magnification of the torsional force. The magnification of the torsional force is dependent on the rate at which the radii of the pair of conic helixes increase.

As a baseline, Figure 13 uses an arrangement with no change in diameter, i.e. where the ratio of maximum and minimum radii [Do/do] is one. This is a rotor where the radii of the pair of conic helixes does not increase i.e. this is a rotor based upon a cylindrical helix and not a conic helix. The rotor described herein, which are based on blades formed by conic helixes, have a ratio of greater than one and this provides a torque multiplication and an increase in efficiency as shown in the Figure.

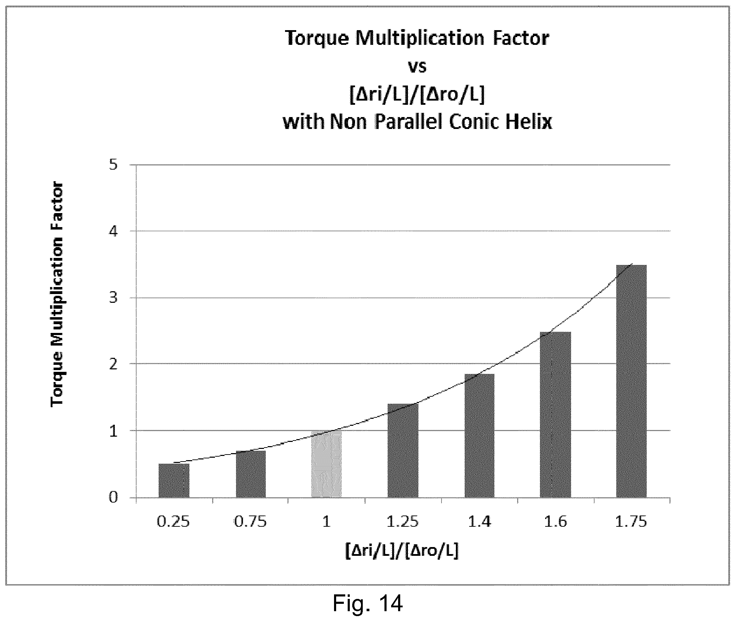

In some of the variants discussed above, the inner and outer conic helixes are formed on non-parallel conic surfaces. Figure 14 is a graph illustrating the effect of increasing or decreasing the relative radii of the pair of conic helixes to form a pair of non-parallel conic helixes. When the inner conic helix increases in radius at a slower rate than the increase in radius of the outer conic helix (i.e. $[\Delta ri/L]/[\Delta ro/L] < 1$), arbitrary cross sectional areas at first and second longitudinal distances along the rotor increase at a faster rate. This has the effect of reducing the changes in the velocity components and since the mass flow is constant, the hydrodynamic reaction forces and torsional forces produced are lower. When the inner conic helix radius increases at a faster rate than the outer conic helix radius (i.e. $[\Delta ri/L]/[\Delta ro/L] > 1$), the

arbitrary cross sectional areas within the rotor increase at a slower rate. This has the effect of increasing the changes in the velocity components and since the mass flow is constant, the hydrodynamic reaction forces and the torsional forces produced are larger. The point where $[\Delta ri/L]/[\Delta ro/L] = 1$ is a rotor where the radii of the pair of conic helixes increase at the same rate to form a pair of parallel conic helixes.

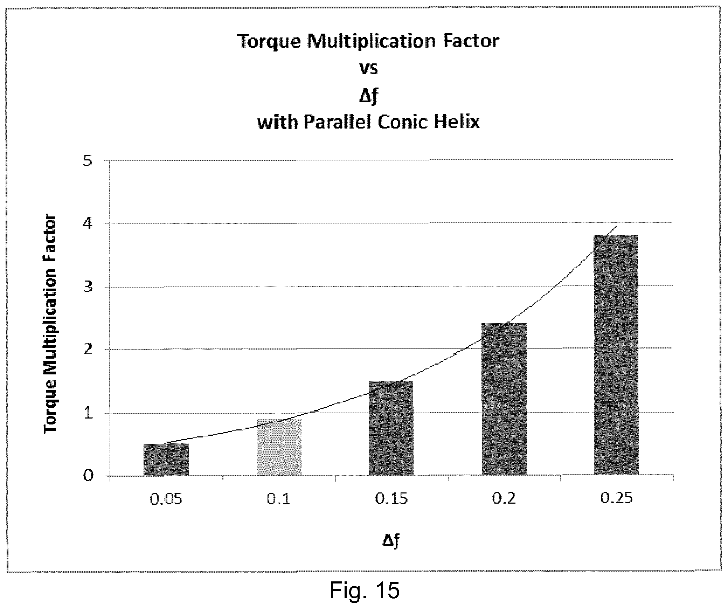

Other variants discussed above involve the use of different changes in pitch for the decreasing pitch of the conic helixes. Figure 15 is a graph illustrating the effect of changes in the rate of decrease of the helical pitch that results in a change in the rate of increase of helical frequency $\Delta f$. As shown in the Figure, a change of this nature will result in an increase or decrease in the torsional forces and thus power output. A decrease in torsional force is achieved by a slower rate of decrease of helical pitch or a slower rate of increase of helical frequency and an increase in torsional force is achieved by a faster rate of decrease of helical pitch or a faster rate of increase in helical frequency. In Figure 15, the rotor labelled $\Delta f = 0:1$ is based upon the rotor presented in Figures 6a to 8b. In comparison, the rotor labelled $\Delta f = 0.05$ is based upon the rotor presented in Figures 11a and 11b whilst the rotor labelled $\Delta f = 0.25$ is based upon the rotor presented in Figures 12a and 12b.

The relationships set out in Figures 13 to 15 enable optimisation of the rotor design depending on the filter characteristics. For low pressure filtration, the pressure differential would typically be lower and so would generate a low backwash flow rate. For a low backwash flow rate the rotor should have parameters selected from the right hand side of the graphs of Figures 13 to 15. Rotors with these parameters will produce larger forces for a given flow. Conversely, for high pressure filtration, the pressure differential would generally by higher and would generate a high backwash flow rate. The rotor for higher pressure differential should have parameters selected from towards the left hand side of the graphs as these rotors will produce smaller forces for a given flow. The rotor design and the pressure differential should be matched with the sealing forces required for good contact with the filter element wall whilst also ensuring the sealing force is not too high to damage the filter screen.

It will be appreciated that the cleaning head described above can be used for any filter arrangement and is not limited to the cylindrical filter element and rotating backwash arrangement described above. In the preferred embodiments above the fluid is moving from the inside to the outside of the cylindrical filter element 1 but the reverse direction may also be accommodated. Alternative systems may be used to traverse the cleaning head across the filter wall, as appropriate for the geometry of the filter wall. The cleaning head may be adapted for retro-fitting to any suitable known backwashing mechanism, for example by design of the conduit 2 to join with flow passages of the known backwashing mechanism in an appropriate fashion.

**Claims**

1. A cleaning head for a filter backwashing mechanism, the cleaning head comprising: a nozzle for contact with a filter element wall (1) and for receiving a flow of backwash fluid (8, 9), wherein the nozzle comprises a rotor (3) for generating a torque when exposed to the flow of backwash fluid (8, 9), wherein the cleaning head is arranged such that at least a part of the nozzle will move toward and/or apply a force to the filter element wall as a result of the torque generated by the rotor (3), and wherein the torque generated by the rotor (3) is converted by a screw thread arrangement (6, 7) into a linear force and/or movement of the at least the part of the nozzle.

2. A cleaning head as claimed in claim 1, wherein the torque generated by the rotor (3) produces a linear movement of the nozzle or part of the nozzle in a direction that is toward the filter element wall (1), in use, and/or results in a linear force applied by the nozzle or part thereof in a direction that is toward the filter element wall (1), in use.

3. A cleaning head as claimed in claim 1 or 2, wherein the rotor (3) is mounted to the cleaning head via the screw thread arrangement (6, 7) and the screw thread (6) has an axis of rotation that is perpendicular to the surface of the filter element wall.

4. A cleaning head as claimed in claim 3, wherein the rotor (3) forms at least an end part of the nozzle, so that an inlet of the rotor (3) forms a contact part of the nozzle that is intended to contact with the filter element wall (1) during backwashing.

5. A cleaning head as claimed in claim 1 or 2, wherein the nozzle comprises the rotor (3) and a separate contact part arranged for linear movement driven by rotation of the rotor (3), the contact part being for contact with the filter element wall (1) during backwashing.

6. A cleaning head as claimed in claim 5, wherein the rotor (3) is mounted to the cleaning head for rotating movement only and the contact part is a threaded part slidably mounted with respect to a main body of the nozzle and connected to a threaded part of the screw thread arrangement that rotates driven by rotation of the rotor.

7. A cleaning head as claimed in any preceding claim comprising a hollow conduit (2) for passage of backwash fluid (8, 9) from the nozzle to downstream parts of the backwashing mechanism, wherein the hollow conduit (2) supports the nozzle and/or rotor (3).

8. A cleaning head as claimed in claim 7 wherein the hollow conduit (2) includes a part of a main flow path for the backwashing mechanism and a branch extending from the part of the main flow path for supporting the nozzle.

9. A cleaning head as claimed in any preceding claim, wherein the rotor (3) comprises one or more helical rotor blade(s) (31) with a pitch that decreases in the direction of flow of backwash fluid.

10. A cleaning head as claimed in any preceding claim, wherein the rotor (3) has a conic shape, with blades (31) formed between two conic surfaces.

11. A cleaning head as claimed in any preceding claim, comprising a tension or torsion spring within the filter cleaning head that causes a 'retractable' force to act on the contact part and/or on the rotor (3) causing the contact part to withdraw from the filter element wall (1) and/or causing the rotor to rotate in reverse when the normal working load is removed.

12. A cleaning head as claimed in any of claims 1 to 10, wherein the rotor (3) is arranged to rotate in reverse when a reverse flow is applied, whereby a reverse flow can be used to reverse the movement of the at least a part of the nozzle.

13. A backwashing mechanism comprising one or more cleaning head(s) as claimed in any preceding claim, wherein the backwashing mechanism is for installation in a filter with one or more filter element(s).

14. A method of cleaning a filter element wall comprising use of a cleaning head or backwashing mechanism as claimed in any preceding claim for cleaning a filter element wall (1).

15. A method of manufacturing a filter cleaning head comprising providing a cleaning head with a nozzle as claimed in any of claims 1 to 12.

**Patentansprüche**

1. Reinigungskopf für einen Filterrückspülmechanismus, wobei der Reinigungskopf umfasst: eine Düse zum Kontakt mit einer Filterelementwand (1) und zum Aufnehmen eines Stoms einer Rückspülflüssigkeit (8, 9), wobei die Düse einen Rotor (3) zum Erzeugen eines Drehmoments umfasst, wenn er dem Strom der Rückspülflüssigkeit (8, 9) ausgesetzt ist, wobei der Reinigungskopf so angeordnet ist, dass sich zumindest ein Teil der Düse aufgrund des von dem Rotor (3) erzeugten Drehmoments auf die Filterelementwand zu bewegt und/oder eine Kraft auf diese ausübt, und wobei das Drehmoment, das durch den Rotor (3) erzeugt wird, durch eine Schraubengewindeanordnung (6, 7) in eine lineare Kraft und/oder Bewegung zumindest des Teils der Düse übertragen wird.

2. Reinigungskopf nach Anspruch 1, wobei das von dem Rotor (3) erzeugte Drehmoment eine lineare Bewegung der Düse oder eines Teils der Düse in Richtung zur Filterelementwand (1) erzeugt, wenn der Reinigungskopf in Gebrauch ist, und/oder in einer linearen Kraft resultiert, die durch die Düse oder einen Teil davon in Richtung zur Filterelementwand (1) wirkt, wenn der Reinigungskopf in Gebrauch ist,

3. Reinigungskopf nach Anspruch 1 oder 2, wobei der Rotor (3) am Reinigungskopf über eine Schraubengewindeanordnung (6, 7) befestigt ist und das Schraubengewinde (6) eine Drehachse hat, die im Allgemeinen senkrecht zur Oberfläche der Filterelementwand steht.

4. Reinigungskopf nach Anspruch 3, wobei der Rotor (3) mindestens ein Endteil der Düse bildet, so dass ein Einlass des Rotors (3) einen Kontaktteil der Düse bildet, der während des Rückspülens mit der Filterelementwand (1) in Kontakt treten soll.

5. Reinigungskopf nach Anspruch 1 oder 2, wobei die Düse den Rotor (3) und ein separates Kontaktteil umfasst, das für eine durch Drehung des Rotors (3) angetriebene Linearbewegung angeordnet ist, wobei das Kontaktteil zum Kontakt mit der Filterelementwand (1) während des Rückspülens dient.

6. Reinigungskopf nach Anspruch 5, wobei der Rotor (3) an dem Reinigungskopf nur für eine Drehbewegung angebracht ist und das Kontaktteil ein Gewindeteil ist, das in Bezug auf einen Hauptkörper der Düse verschiebbar montiert und mit einem Gewindeteil verbunden ist, das sich dreht, angetrieben durch Drehung des Rotors (3).

7. Reinigungskopf nach einem der vorhergehenden Ansprüche, umfassend eine hohle Leitung (2) zum Durchleiten von Rückspülflüssigkeit (8, 9) von der Düse zu stromabwärtigen Teilen des Rückspülmechanismus, wobei die hohle Leitung (2) die Düse und/oder den Rotor (3) trägt.

8. Reinigungskopf nach Anspruch 7, wobei die hohle Leitung (2) einen Teil eines Hauptströmungswegs für den Rückspülmechanismus und eine Abzweigung umfasst, die sich von dem Teil des Hauptströmungswegs zum Tragen der Düse, erstreckt.

9. Reinigungskopf nach einem der vorhergehenden Ansprüche, wobei der Rotor (3) ein schraubenförmiges Rotorblatt oder mehrere schraubenförmige Rotorblätter (31) mit einer Steigung umfasst, die in Richtung des Strom der Rückspülflüssigkeit abnimmt.

10. Reinigungskopf nach einem der vorhergehenden Ansprüche, wobei der Rotor (3) eine konische Form hat, wobei zwischen zwei konischen Oberflächen Klingen (31) gebildet sind.

11. Reinigungskopf nach einem der vorhergehenden Ansprüche, umfassend eine Zug- oder Torsionsfeder innerhalb des Filterreinigungskopfes, die bewirkt, dass eine "zurückziehbare" Kraft auf das Kontaktteil und/oder auf den Rotor (3) wirkt, wodurch das Kontaktteil dazu veranlasst wird, sich von der Filterelementwand (1) abzuziehen und/oder, der Rotor (3) dazu veranlasst wird, sich rückwärts zu drehen, wenn die normale Arbeitslast entfernt wird.

12. Reinigungskopf nach einem der Ansprüche 1 bis 10, wobei der Rotor (3) so angeordnet ist, dass er sich rückwärts dreht, wenn ein umgekehrter Fluss angewendet wird, wodurch ein umgekehrter Fluss verwendet werden kann, um die Bewegung des mindestens einen Teils der Düse umzukehren.

13. Rückspülmechanismus mit einem oder mehreren Reinigungsköpfen nach einem der vorhergehenden Ansprüche, wobei der Rückspülmechanismus zum Einbau in einen Filter mit einem oder mehreren Filterelementen dient.

14. Verfahren zum Reinigen einer Filterelementwand, umfassend die Verwendung eines Reinigungskopfes oder Rückspülmechanismus nach einem der vorhergehenden Ansprüche zum Reinigen einer Filterelementwand (1).

15. Verfahren zur Herstellung eines Filterreinigungskopfes, umfassend das Bereitstellen eines Filterreinigungskopfes mit einer Düse, wie in einem der Ansprüche 1 bis 12 beschrieben.

**Revendications**

1. Tête de nettoyage pour un mécanisme de lavage de filtre à contre-courant, la tête de nettoyage comprenant : une buse pour entrer en contact avec une paroi d'élément filtrant (1) et pour recevoir un flux de fluide de lavage à contre-courant (8, 9), dans laquelle la buse comprend un rotor (3) pour générer un couple lorsqu'il est exposé au flux de fluide de lavage à contre-courant (8, 9), la tête de nettoyage étant agencée de telle sorte qu'au moins une partie de la buse se déplace vers et/ou applique une force sur la paroi d'élément filtrant en conséquence du couple généré par le rotor (3), et le couple généré par le rotor (3) étant converti par un agencement de filetage (6, 7) en une force et/ou un mouvement linéaire d'au moins une partie de la buse.

2. Tête de nettoyage selon la revendication 1, dans laquelle le couple généré par le rotor (3) produit un mouvement linéaire de la buse ou d'une partie de la buse dans une direction qui est vers la paroi d'élément filtrant (1), en cours d'utilisation, et/ou résulte en une force linéaire appliquée par la buse ou une partie de celle-ci dans une direction qui est vers la paroi d'élément filtrant (1), en cours d'utilisation.

3. Tête de nettoyage selon la revendication 1 ou 2, dans laquelle le rotor (3) est monté sur la tête de nettoyage via l'agencement de filetage (6, 7) et le filetage (6) a un axe de rotation qui est perpendiculaire à la surface de la paroi d'élément filtrant.

4. Tête de nettoyage selon la revendication 3, dans laquelle le rotor (3) forme au moins une partie d'extrémité de la buse, de sorte qu'une entrée du rotor (3) forme une partie de contact de la buse qui est destinée à entrer en contact avec la paroi d'élément filtrant (1) pendant le lavage à contre-courant.

5. Tête de nettoyage selon la revendication 1 ou 2, dans laquelle la buse comprend le rotor (3) et une partie de contact séparée agencée pour un mouvement linéaire entraîné par la rotation du rotor (3), la partie de contact étant destinée à entrer en contact avec la paroi d'élément filtrant (1) pendant le lavage à contre-courant.

6. Tête de nettoyage selon la revendication 5, dans laquelle le rotor (3) est monté sur la tête de nettoyage pour un mouvement de rotation uniquement et la partie de contact est une partie filetée montée de manière coulissante par rapport à un corps principal de la buse et connectée à une partie filetée de l'agencement de filetage qui tourne entraîné par la rotation du rotor.

7. Tête de nettoyage selon l'une quelconque des revendications précédentes, comprenant un conduit creux (2) pour le passage du fluide de lavage à contre-courant (8, 9) de la buse à des parties en aval du mécanisme de lavage à contre-courant, dans laquelle le conduit creux (2) supporte la buse et/ou le rotor (3).

8. Tête de nettoyage selon la revendication 7, dans laquelle le conduit creux (2) comprend une partie d'un chemin d'écoulement principal pour le mécanisme de lavage à contre-courant et une branche s'étendant depuis la partie du chemin d'écoulement principal pour supporter la buse.

9. Tête de nettoyage selon l'une quelconque des revendications précédentes, dans laquelle le rotor (3) comprend une ou plusieurs pales de rotor hélicoïdales (31) avec un pas qui diminue dans la direction d'écoulement du fluide de lavage à contre-courant.

10. Tête de nettoyage selon l'une quelconque des revendications précédentes, dans laquelle le rotor (3) a une forme conique, avec des lames (31) formées entre deux surfaces coniques.

11. Tête de nettoyage selon l'une quelconque des revendications précédentes, comprenant un ressort de tension ou de torsion à l'intérieur de la tête de nettoyage de filtre qui provoque l'action d'une force "rétractable" sur la partie de contact et/ou sur le rotor (3) provoquant le retrait de la partie de contact de la paroi d'élément filtrant (1) et/ou faisant tourner le rotor en sens inverse lorsque la charge de travail normale est supprimée.

12. Tête de nettoyage selon l'une quelconque des revendications 1 à 10, dans laquelle le rotor (3) est agencé pour tourner en sens inverse lorsqu'un flux inversé est appliqué, moyennant quoi un flux inversé peut être utilisé pour inverser le mouvement d'au moins une partie de la buse.

13. Mécanisme de lavage à contre-courant comprenant une ou plusieurs têtes de nettoyage selon l'une quelconque des revendications précédentes, dans lequel le mécanisme de lavage à contre-courant est destiné à être installé dans un filtre avec un ou plusieurs élément(s) filtrant(s).

14. Procédé de nettoyage d'une paroi d'élément filtrant comprenant l'utilisation d'une tête de nettoyage ou d'un mécanisme de lavage à contre-courant selon l'une quelconque des revendications précédentes pour nettoyer une paroi d'élément filtrant (1).

15. Procédé de fabrication d'une tête de nettoyage de filtre comprenant la fourniture d'une tête de nettoyage avec une buse selon l'une quelconque des revendications 1 à 12.

Figure 1a

Figure 1b

**Figure 1c**

**Figure 1d**

**Figure 2**

**Figure 3a**

**Figure 3b**

**Figure 4**

**Figure 5**

Fig. 6b

Fig. 6a

Fig. 7b

Fig. 7a

Fig. 8a

Fig. 8b

EP 2 834 017 B1

Fig. 9b

Fig. 9a

Fig.10b

Fig. 10a

Fig. 11a

Fig. 11b

EP 2 834 017 B1

Fig. 12b

Fig. 12a

Fig. 13

Fig. 14

EP 2 834 017 B1

Torque Multiplication Factor
vs
Δƒ
with Parallel Conic Helix

Fig. 15

EP 2 834 017 B1

**EP 2 834 017 B1**

**Patent documents cited in the description**

- WO 2006008729 A

- WO 2011058556 A